# EUROPEAN PATENT SPECIFICATION

(11) **EP 2 654 254 B1**
(45) Date of publication and mention of the grant of the patent: **31.08.2016**
(21) Application number: 11849842.7
(22) Date of filing: 12.12.2011
(51) Int. Cl.: H04L 12/715, H04L 12/26, H04L 12/721, H04L 12/939

(54) **COMPUTER SYSTEM, CONTROLLER, CONTROLLER MANAGER, AND COMMUNICATION ROUTE ANALYSIS METHOD**
COMPUTERSYSTEM, STEUERUNG, STEUERUNGSMANAGER, UND KOMMUNIKATIONSLENKUNG-ANALYSEVERFAHREN
SYSTÈME INFORMATIQUE, CONTRÔLEUR, GESTIONNAIRE DE CONTRÔLEUR ET PROCÉDÉ D'ANALYSE DE CHEMIN DE COMMUNICATION

(30) Priority: 13.12.2010 JP 2010277399
(43) Date of publication of application: 23.10.2013
(73) Proprietor: NEC Corporation, Tokyo 108-8001 (JP)
(72) Inventor: GAO Fei, Tokyo 108-8001 (JP); KAWAMOTO Masaya, Tokyo 108-8001 (JP)
(74) Representative: Vossius & Partner Patentanwälte Rechtsanwälte mbB
(86) International application number: PCT/JP2011/078697
(87) International publication number: WO 2012/081549

(56) References cited:
- JP-A- 2003 309 602
- JP-A- 2004 266 534
- JP-A- 2009 030 392
- "OpenFlow Switch Specification Version 1.0.0 ( Wire Protocol 0x01 )", INTERNET CITATION, 31 December 2009 (2009-12-31), pages 1-42, XP002719303, Retrieved from the Internet: URL:http://archive.openflow.org/documents/ openflow-spec-v1.0.0.pdf [retrieved on 2014-01-27]
- Nick McKeown ET AL: "OpenFlow: Enabling Innovation in Campus Networks", , 14 March 2008 (2008-03-14), pages 1-6, XP055002028, Retrieved from the Internet: URL:http://www.openflow.org/documents/open flow-wp-latest.pdf [retrieved on 2011-07-05]

## Description

### TECHNICAL FIELD

The present invention relates to a computer system, a controller, a controller manager, and a communication route analysis method. In particular, the present invention relates to a communication route analysis method in a computer system that uses an open flow protocol.

### BACKGROUND ART

Open Flow as a way for researchers to run experimental protocols in the networks they use every day is discussed in Nick McKeown et al. : " OpenFlow : Enabling Innovation in Campus Networks" , 14 March 2008 (2008-03-14), pages 1-6.

A technique (Open Flow) that controls a forwarding operation of each switch by an external computer in an integrated manner in a computer network is proposed by OpenFlow Consortium (refer to OpenFlow Switch Specification Version 1.0.0 (Wire Protocol 0x01) December 31, 2009 (NPL1)). A network switch (hereafter, referred to as an open flow switch (OFS)) supporting this technique retains detailed information such as a protocol type, a port number and the like in a flow table and thereby enables flow control and acquisition of statistic information. The flow table of the OFS in the network is set and managed by an open flow controller (OFC) in an integrated manner. A method for testing the communication part of a network is exemplified in JP 2004-266534 A, and a method to estimate communication quality for a specified route and to detect communication quality deterioration is discussed in JP 2003-309602 A. JP 2009-030392 A also discloses the technological background.

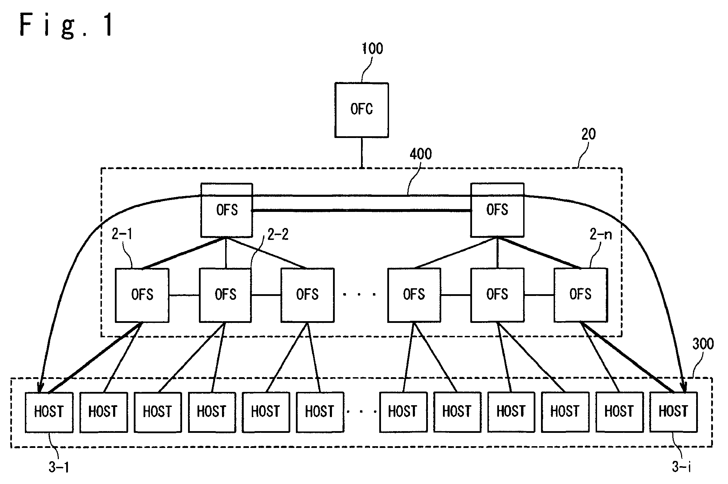

A configuration and operation of a computer system that uses the open flow protocol will be described with reference to Fig. 1. As shown in Fig. 1, the computer system according to the technique related to the present invention has: an open flow controller 100 (hereafter, referred to as an OFC 100), a switch group 20 that has a plurality of open switches 2-1 to 2-n (hereafter, referred to as OFSs 2-1 to 2-n) and a host group 300 that has a plurality of host computers 3-1 to 3-i (hereafter, referred to as hosts 3-1 to 3-i). Here, n and i each is a natural number equal to or larger than 2. Hereafter, when the OFS 2-1 to 2-n are collectively called without any discrimination, they are referred to as OFS 2. When the hosts 3-1 to 3-i are collectively called without any discrimination, they are referred to as a host 3.

The OFC 100 performs settings of a communication route between the hosts 3, a forwarding operation (relaying operation) in the OFS 2 on the route and the like. At this time, the OFC 100 sets a flow entry in the flow table retained by the OFS 2. The flow entry associates a rule for identifying a flow (packet data) with an action for defining an operation for the flow. The OFS 2 on the communication route determines a forwarding destination of a received packet data in accordance with the flow entry set by the OFC 100 to perform the forwarding processing. As a result, the host 3 can transmit and receive the packet data to and from another host 3 by using the communication route set by the OFC 100. That is, in the computer system that uses the open flow, the OFC 100 for setting the communication route and the OFS 2 for carrying out the forwarding processing are separated from each other, which enables the unified management and control of the communication in the entire system.

Referring to Fig. 1, when a packet is transmitted from the host 3-1 to the host 3-i, the OFS 2-1 refers to transmission destination information (header information: for example, a destination MAC address and a destination IP address) in the packet received from the host 3-1 to retrieve an entry matching the header information from the flow table retained in the OFS 2-1. Content of the entry set in the flow table is defined in, for example, the Non-Patent Literature 1.

If no entry associated with received packet data is described in the flow table, the OFS 2-1 forwards the packet data (hereafter, referred to as a first packet), or the header information of the first packet to the OFC 100. The OFC 100 receives the first packet from the OFS 2-1 and determines a route 400 on the basis of the information included in the received packet such as a transmission source host and a transmission destination host.

The OFC 100 instructs all of the OFS 2 on the route 400 to set the flow entry for defining the forwarding destination of the packet (i.e. issues a flow table update instruction). Each OFS 2 on the route 400 updates the flow table managed by itself, in response to the flow table update instruction. After that, each OFS 2 starts packet forwarding in accordance with the updated flow table. Thus, the packet is transferred to the destination host 3-i through the route 400 determined by the OFC 100,

To monitor a delay time in a communication route in a network to achieve route control with avoiding a large delay time communication route is useful for efficiently operating a large-scale and complicated network. However, such the route controlling function is not implemented in the above-mentioned system using the open flow protocol (hereafter, referred to as an OpenFlow system). Therefore, a method of efficiently calculating a delay time in a communication network to perform route control is required when operating the OpenFlow system.

Also, there are protocols such as RIP (Routing Information Protocol) and OSPF (Open Shortest Path First) that can achieve route control of a legacy network. If such the protocol is applied to the OpenFlow system, it is necessary to add functions based on the RIP and the OSPF to the switch (OFS) (i.e. hardware installation and software installation). In this case, however, the communication route is set by the switch, and such the system cannot be said to be a system based on the open flow protocol.

Moreover, there are problems in the RIP and the OSPF. Although the RIP is easy to install, a communication route in which the number of hops is the minimum is selected as an optimum route and thus the selected route is not always a minimum delay route. In the case of the OSPF, although a communication route in which the communication delay is the minimum is selected as an optimum route, it is complicated to install the OSPF. The OSPF performs the route control by exchanging route information via LSA (Link State Advertisement), LSDB (Link State Database) and the like. Therefore, not only the consumption amount of network equipment calculation resources is increased but also the load imposed on the communication route is increased.

### SUMMARY OF INVENTION

An object of the present invention is to measure a delay time in a communication route in a computer system using the open flow protocol.

Another object of the present invention is to avoid a large delay communication route in a computer system using the open flow protocol.

In order to solve the above-mentioned problems, the present invention employs the following means.

A computer system according to the present invention has a first switch and a second switch that are adjacent to each other, a controller and an analyzing module. The controller is configured to set, for the first switch, a flow entry whose rule is header information of a delay measurement packet and whose action is forwarding to the second switch and to transmit the delay measurement packet to the first switch. The analyzing module is configured to calculate a delay time in a communication section between the first switch and the second switch. The first switch forwards the delay measurement packet received from the controller to the second switch, in accordance with the flow entry set in the first switch. The analyzing module obtains the delay measurement packet from the second switch and calculates the delay time in the communication section by using a time stamped on the delay measurement packet.

A controller according to the present invention has: a flow control unit configured to set, for a first switch, a flow entry whose rule is header information of a delay measurement packet and whose action is forwarding to a second switch adjacent to the first switch; and a delay measuring unit configured to transmit the delay measurement packet to the first switch. The delay measuring unit obtains the delay measurement packet that is forwarded from the first switch to the second switch in accordance with the flow entry. Moreover, the delay measuring unit calculates a delay time in a communication section between the first switch and the second switch by using a time stamped on the delay measurement packet.

The analyzing module according to the present invention may be installed on a controller manager that is different from the controller. In this case, a delay time between switches under the management of a plurality of controllers is calculated by the controller manager.

The function of the controller or the controller manager according to the present invention is achieved by a program that is recorded on a recording medium and executed by a computer.

A communication route analysis method according to the present invention includes : a step of setting, by a controller, for a first switch, a flow entry whose rule is header information of a delay measurement packet and whose action is forwarding to a second switch adjacent to the first switch; a step of transmitting, by the controller, the delay measurement packet to the first switch; a step of forwarding, by the first switch, the delay measurement packet received from the controller to the second switch, in accordance with the flow entry set in the first switch; and a step of obtaining, by an analyzing module, the delay measurement packet from the second switch and calculating the delay time in the communication section by using a time stamped on the delay measurement packet.

According to the present invention, it is possible to measure a delay time in a communication route in a computer system using the open flow protocol.

Moreover, it is possible to avoid a large delay communication route in a computer system using the open flow protocol.

### BRIEF DESCRIPTION OF DRAWINGS

The above and other objects, advantages and features of the present invention will be more apparent from the following description of certain preferred embodiments taken in conjunction with the accompanying drawings.
Fig. 1 is a view showing an example of a configuration of a computer system that uses an open flow protocol.
Fig. 2 is a view showing a configuration of a computer system in a first exemplary embodiment according to the present invention.
Fig. 3 is a view showing an example of a structure of measurement target path information set in an open flow controller according to the present invention.
Fig. 4 is a view showing an example of a structure of a flow table set in the open flow controller according to the present invention.
Fig. 5 is a view showing an example of a flow entry for delay time measurement set for an open flow switch by the open flow controller according to the present invention.
Fig. 6 is a view showing an example of a flow entry update message for setting the flow entry for delay time measurement.
Fig. 7 is a view showing an example of a configuration of a delay measuring unit according to the present invention.
Fig. 8 is a view showing an example of delay time information according to the present invention.
Fig. 9 is a view showing an example of a delay measurement packet according to the present invention.
Fig. 10 is a view showing an example of a delay time measurement operation in the computer system according to the present invention.
Fig. 11 is a flow chart showing an operation for extracting a minimum delay route according to the present invention.
Fig. 12 is a view showing a configuration example of a network being a target of the minimum delay route extraction.
Fig. 13 is a view showing an example of a weighted directional graph for retrieving the minimum delay route that is used in a communication route determination operation according to the present invention.
Fig. 14 is a view showing a configuration of the computer system in a second exemplary embodiment according to the present invention.

### DESCRIPTION OF EXEMPLARY EMBODIMENTS

Exemplary embodiments of the present invention will be described below with reference to the attached drawings. In the drawings, the same or similar reference number indicates the same, similar or equivalent configuration element.

### 1. First Exemplary embodiment

### (Configuration of Computer System)

The computer system according to the present invention controls packet data forwarding by using the open flow technique, as in the case of the system shown in Fig. 1. In the computer system according to the first exemplary embodiment, a packet for delay measurement is forwarded through a master switch to a slave switch. A propagation time (delay time) between the switches is measured by using a reception time of the delay measurement packet that is notified as the first packet from the slave switch and a transmission time when the open flow controller transmits the packet.

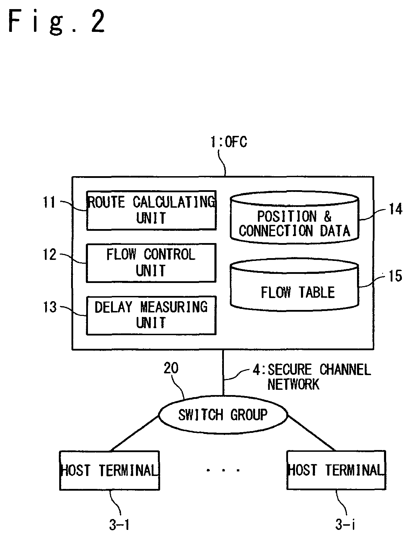

A configuration of the computer system in the first exemplary embodiment according to the present invention will be described with reference to Figs. 2 to 9. As shown in Fig. 2, the computer system according to the present invention has: an open flow controller 1 (hereafter, referred to as an OFC 1), a switch group 20 that has a plurality of open flow switches, and a plurality of host terminals 3-1 to 3-i. Although not shown in Fig. 2, the switch group 20 has a plurality of open flow switches 2-1 to 2-n (hereafter, referred to as OFSs 2-1 to 2-n), as in the case of the system shown in Fig. 1. Here, n and i each is a natural number equal to or larger than 2. Hereafter, when the OFSs 2-1 to 2-n are collectively called without any discrimination, they are referred to as OFS 2. When the hosts 3-1 to 3-i are collectively called without any discrimination, they are referred to as a host 3.

The OFC 1 utilizes the open flow technique to control construction of a communication route associated with packet forwarding and packet forwarding processing in the system. Here, the open flow technique indicates a technique in which the OFC 1 sets route information in a unit of multilayer or flow for OFS 4 and OFVS 33 (OpenFlow Virtual Switch) on the communication route in accordance with a routing policy (Flow Entry: Flow + Action) and performs route control and node control (for more details, refer to the Non-Patent Literature 1). As a result, the route controlling function is separated from a router and a switch, and thus optimum routing and traffic management can be achieved by centralized control by the controller. The OFS 2 and the OFVS 33 to which the open flow technique is applied treat the communication not in a unit of packet or frame as in the case of the conventional router and switch, but as an END2END flow.

The configuration of the OFC 1 in the first exemplary embodiment will be described in more detail with reference to Fig. 2. It is preferable that the OFC 1 is achieved by a computer that has a CPU and a memory device. In the OFC 1, the CPU (not shown) executes a program stored in the memory device (recording medium), and thereby respective functions of an address route calculating unit 11, a flow control unit 12 and a delay measuring unit 13 shown in Fig. 2 are achieved. Moreover, the OFC 1 retains information (physical topology information) regarding positions and a connection state of the switch group 20 controlled by the OFC 1, as a position & connection data 14. The position & connection data 14 has, for example, identifiers (for example, DataPath ID : DPID) of all the OFSs 2 controlled by the OFC 1, all port numbers of each OFS 2, and DPID of the OFS 2 connected to each port.

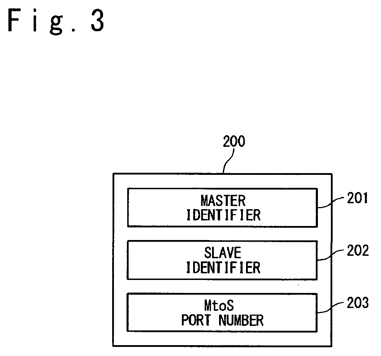

The route calculating unit 11 uses the position & connection data 14 to set a communication section as a target of delay time measurement. More specifically, the route calculating unit 11 calculates routes between the respective hosts 3 by using the position & connection data 14, sets one of two adjacent OFSs 2 on the route as a master switch, sets the other as a slave switch, and sets a communication section between the master switch and the slave switch as a delay measurement target section. At this time, the route calculating unit 11 records information indicating the delay measurement target section as measurement target path information 200 as shown in Fig. 3 in the memory device (not shown). For example, the route calculating unit 11 records a correspondence relationship between the DPID (master identifier 201) of the OFS 2 set as the master switch, the DPID (slave identifier 202) of the OFS 2 set as the slave switch, and the port number (M to S port number 203) destined to the slave switch connected to the master switch, as the measurement target path information 200.

Based on Modify Flow Entry Message, the flow control unit 12 performs setting, modification and deletion of the flow entry (Rule + Action) for the switch (here, OFS 2) according to the open flow protocol. As a result, the OFS 2 executes the action (for example, relaying or discarding the packet data) associated with the rule corresponding to the header information of a received packet.

An example of the rule set in the flow entry includes a combination of addresses and identifiers of Layer 1 to 4 of an OSI (Open Systems Interconnection) reference model which are included in the header information of the packet data of TCP/IP. For example, a combination of a physical port of the Layer 1, a MAC address of the Layer 2, an IP address and a protocol of the Layer 3, and a port number and a VLAN tag (VLAN id) of the Layer 4 is set as the rule.

Here, the identifier such as the port number and the address that are set as the rule by the flow control unit 12 may be set in a form of a predetermined range. Also, the destination address and the source address are preferably discriminated from each other when set as the rule. For example, a range of the destination MAC address, a range of the destination port number for identifying a connection destination application, and a range of the transmission source port number for identifying a connection source application are set as the rule. Moreover, the identifier for identifying a data forwarding protocol may be set as the rule.

As the action set in the flow entry, for example, a method of handling the packet data of TCP/IP is defined. For example, information indicating whether or not to relay the received packet data and, if it is relayed, its transmission destination are set. Moreover, information that instructs copy or discard of the packet data may be set as the action.

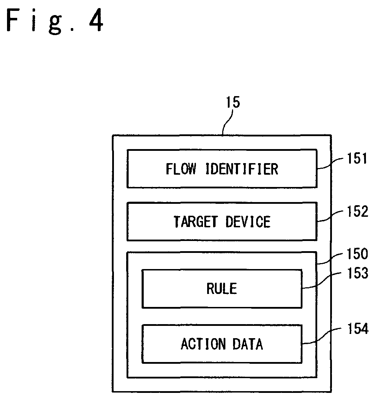

The flow entry that is set (or was set) in the OFS 2 is recorded on the flow table 15 by the flow control unit 12. Fig. 4 is a view showing an example of a structure of the flow table 15 set by the flow control unit 12 according to the present invention. A correspondence relationship between a flow identifier 151 for identifying the flow entry, a target device 152 indicating the identifier (for example, DPID) of the OFS 2 being a setting target and a flow entry 150 to be set is recorded on the flow table 15. A rule 153 and an action data 154 are set in the flow entry 150. The flow control unit 12 can recognize what kind of flow entry 150 is set in the OFS 2, by referring to the flow table 15. Also, although not shown in Fig. 4, the flow table 15 may include such information that indicates whether or not the flow entry 150 is set in the OFS 2 being the target device 152.

The flow control unit 12 according to the present invention not only sets the flow entry for controlling the packet forwarding for the OFS 2 but also sets a delay time measurement flow entry for measuring a flow time in a communication section for the OFS 2 (the master switch and the slave switch) . More specifically, in response to notification (PacketIN) of the first packet from the OFS 2, the flow control unit 12 usually sets a flow entry that instructs forwarding or discard of the first packet, for the OFS 2 on the route. Moreover, the flow control unit 12 sets a delay time measurement flow entry for the master switch and the slave switch in a measurement target section specified by the route calculating unit 11.

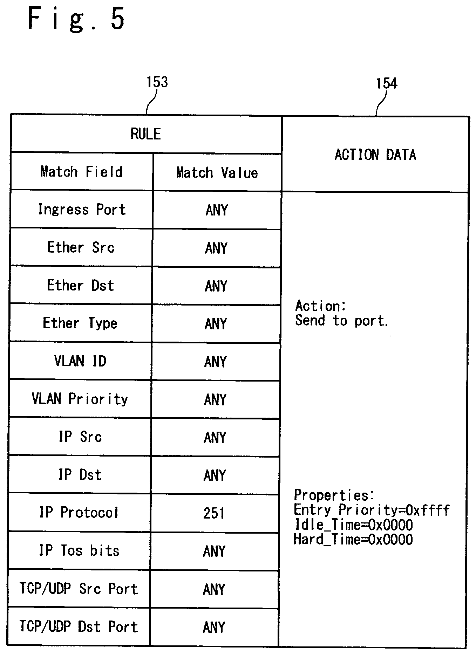

Fig. 5 is a view showing an example of the delay time measurement flow entry that is set in the OFS 2 by the flow control unit 12. Details of the delay time measurement flow entry set in the OFS 2 (the master switch) will be described with reference to Fig. 5. For the delay time measurement flow entry, a match field (Match Field) and a value of the match field (Match Value) are defined as the rule 153. Also, as the action data 154, an action (Action) and a property (Property) are defined. For example, for the delay time measurement flow entry, the rule 153 is set in which the value of the protocol of the IP header field is defined as "251" and the value of the other match field is defined as "any". An entry item set as "ANY" matches with any value. Moreover, at this time, for the action data 154, "Forward to Port (Action : Send to Port) " is set as the action, and "Highest Priority (Entry Priority = 0xffff) is set as the priority, and a limitless effective period of the entry (Idle_Time = 0x0000 and Hard_Time= 0x0000) " is set. Since the priority of the flow entry is set to "0xffff", the delay time measurement flow entry becomes a matching target at the highest priority and, if matched, a predetermined action is always executed with respect to the packet. Moreover, since "idle_time = 0x0000, hard_time = 0x0000", a life time of the delay time measurement flow entry becomes infinite (it is not deleted due to life time in the OFS 2).

Here, the forwarding destination port set as the action is different depending on whether a switch as a target of the flow entry setting is the master switch or the slave switch. For example, in the case of the delay time measurement flow entry that is set for the master switch, the M to S port number 203 associated with the master switch (the port number connected to the slave switch) is specified as the forwarding destination in the measurement target path information 200. On the other hand, in the case of the delay time measurement flow entry that is set for the slave switch, the port number of the slave switch connected to the OFC 1 is specified as the forwarding destination.

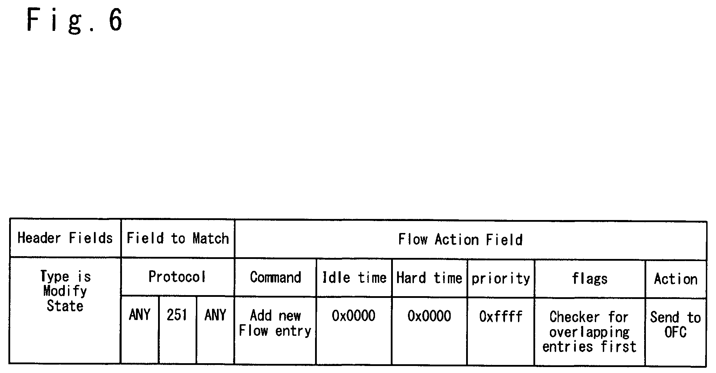

The flow control unit 12 updates (sets) the flow entry in the OFS 2 by using a flow entry update message (Modify Flow Entry Message). For example, when setting the delay time measurement flow entry as shown in Fig. 5 for the OFS 2 (master switch), the flow control unit 12 generates the flow entry update message (Modify Flow Entry Message) as shown in Fig. 6 and transmits it to the OFS 2 (master switch) being the target of the setting. The flow entry update message has a header field (Header Field), a rule field (Field to Match) and an action field (Flow Action Field). In the header field of the flow entry update message shown in Fig. 6, "Modify Flow Entry Message" that indicates that this message is the flow entry update message is specified. In the rule field thereof, the rule 153 to be registered on the OFS 2 is specified. In the present example, the IP header field protocol being "251" and the other items being "ANY" are specified in the rule field. Also, the action data 154 to be registered on the OFS 2 is specified in the action field. For example, the action field includes Command, Idle_Time, Hard_Time, Priority, Flags, and Action. In the present example, "Add new Flow entry" indicating that this message is for adding a new entry is specified in the Command, "0x0000" indicating infinite is specified in the Idle_Time and the Hard_Time, "0xffff" indicating the highest priority is specified in the Priority, "Checking overlapping entry first" indicating check of duplication of the entry is specified in the flags, and "Send to OFC" indicating forwarding a received packet to the OFC 1 is specified in the Action.

The OFS 2 receives the flow entry update message shown in Fig. 6 and sets the flow entry in its own flow table. In the flow entry, the rule is that the IP header field protocol is "251" and the action is to forward to the OFC 1. As a result, the OFS 2 forwards a received packet (the delay measurement packet) whose IP header field is "251" to the OFC 1.

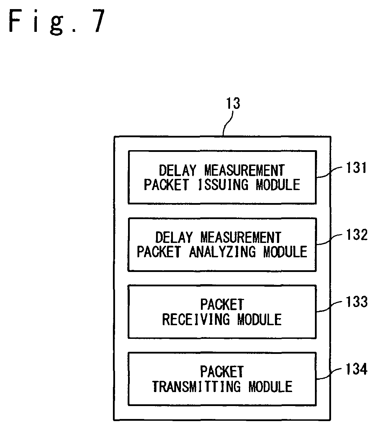

The delay measuring unit 13 not only generates the delay measurement packet but also analyzes the delay measurement packet forwarded through the switches to calculate a delay time (propagation time) in a communication section formed between the master switch and the slave switch. Fig. 7 is a view showing an example of a configuration of the delay measuring unit 13. As shown in Fig. 7, the delay measuring unit 13 has a delay measurement packet issuing module 131, a delay measurement packet analyzing module 132, a packet receiving module 133 and a packet transmitting module 134.

The delay measurement packet issuing module 131 generates the delay measurement packet that is for measuring a delay time (propagation time) in the communication section calculated by the route calculating unit 11. More specifically, the delay measurement packet issuing module 131 refers to the measurement target path information 200 to determine a communication section being the target of the delay time measurement and the master switch and the slave switch in the communication section. Then, the delay measurement packet issuing module 131 generates the delay measurement packet which is so defined as to be forwarded from the master switch to the slave switch that are determined as the delay measurement target. The delay measurement packet has a timestamp field where a transmission time and a reception time in the OFC 1 are stamped.

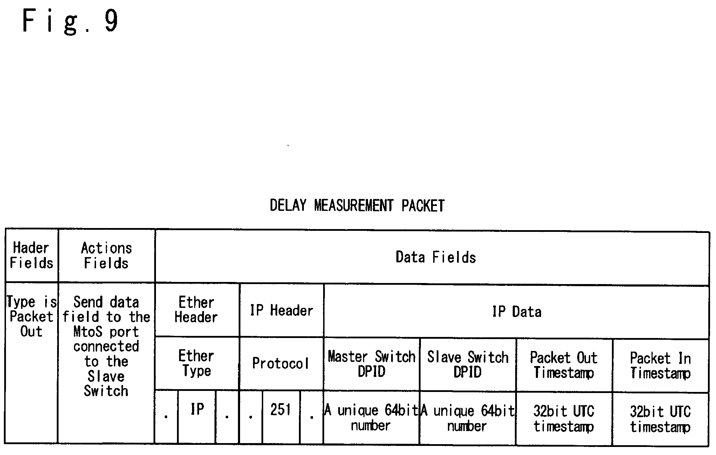

It is preferable that the delay measurement packet is configured in Send Packet Message format that is based on the open flow protocol. Fig. 9 is a view showing an example of a structure of the delay measurement packet. As shown in Fig. 9, the delay measurement packet has a header field (Header Field), an action field (Actions Field) and a data field (Data Field). For example, "Packet Out Message" indicating that this message is a message destined to a switch from the OFC 1 is specified in the Header Field, and an action "Send Field to the M to S port connected to the Slave Switch" indicating to forward the content of the Data Field in this message to the port connected to the slave switch is specified in the Actions Field.

Moreover, the Data Field has an Ether header field (Ether Header), an IP header field (IP Header) and an IP data field (IP DATA). For example, "0x0800 (IPv4)" is specified in the Ether Type in the Ether Header, and "251 (one of International Standard Non-Defined IP Protocol) " is specified in the Protocol in the IP Header. In this case, the OFC 1 recognizes a received packet whose Protocol value matches "251" as the delay measurement packet. Moreover, the slave switch executes the action (here, forward the received packet to the OFC 1) that is set in the delay measurement flow entry whose rule is "the value of the Protocol being 251".

Moreover, an identifier of the master switch (Master Switch DPID), an identifier of the slave switch (Slave Switch DPID), a timestamp (Packet Out Timestamp) where the transmission time of the packet from the OFC 1 is stamped, and a timestamp (Packet In Timestamp) where a reception time of the packet by the OFC 1 is stamped are specified in the IP DATA field of the delay measurement packet.

The DPID of the OFS 2 (master switch) that is the destination of the delay measurement packet transmitted from the OFC 1 is specified in the Master Switch DPID in the IP Data field. Also, the DPID of the OFS 2 (slave switch) that receives the delay measurement packet forwarded from the master switch and transmits Packet-In Message (first packet) to the OFC 1 is specified in the Slave Switch DPID. The port number of the Master Switch connected to the Slave Switch is specified in the M to S port field. Therefore, the master identifier 201 and the slave identifier 202 specified by the measurement target path information 200 are specified in the Master Switch DPID and the Slave Switch DPID, respectively.

An UTC (Universal Time, Coordinated) when the delay measurement packet is generated is specified in a microsecond unit in the Packet Out Timestamp. The Packet In Timestamp is a region in which the UTC is recorded when the OFC 1 receives the delay measurement packet. Therefore, at a time when the delay measurement packet is generated, "0x00000000" is specified in the Packet In Timestamp. It should be noted that the Packet Out Timestamp may be used as a region in which the UTC is recorded when the OFC 1 transmits the delay measurement packet. In this case, "0x00000000" is specified in the Packet Out Timestamp.

The delay measurement packet is transmitted by the packet transmitting module 134 through a secure channel network 4 to the master switch. The delay measurement packet which is forwarded from the slave switch through the secure channel network 4 to the OFC 1 is received by the packet receiving module 133 and forwarded to the delay measurement packet analyzing module 132. At this time, the packet receiving module 133 stamps the reception time of the delay measurement packet on the Packet Out Timestamp in the delay measurement packet. If "0x00000000" is specified in the Packet Out Timestamp, the packet transmitting module 134 may stamp the transmission time on the Packet Out Timestamp.

The delay measurement packet analyzing module 132 calculates a delay time in a section through which the packet has passed, based on the time stamps in the delay measurement packet received by the packet receiving module 133. More specifically, the delay measurement packet analyzing module 132 refers to the Protocol in the IP Header or the Master Switch DPID and Slave Switch DPID in the IP Data of the received packet to determine whether or not the received packet is the delay measurement packet. For example, the delay measurement packet analyzing module 132 refers to the flow table 15 to determine that the received packet matching the rule set in the delay measurement flow entry or the setting target switch is the delay measurement packet. More specifically, the delay measurement packet analyzing module 132 determines that the received packet whose Protocol of the IP Header set as the rule of the delay measurement flow entry is "251" is the delay measurement packet. Alternatively, the delay measurement packet analyzing module 132 determines that the received packet whose Master Switch DPID and Slave Switch DPID of the IP Data respectively match the master switch and the slave switch set in the delay measurement flow entry is the delay measurement packet.

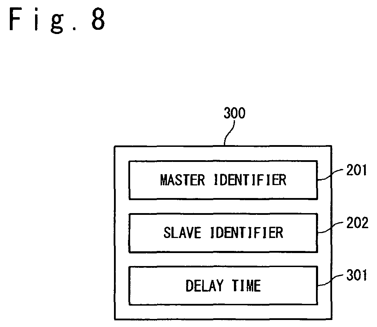

The delay measurement packet analyzing module 132 calculates a period from the time recorded in the Packet Out Timestamp to the time recorded in the Packet In Timestamp of the delay measurement packet as the delay time in the measurement target section. As shown in Fig. 8, a delay time 301 calculated by the delay measurement packet analyzing module 132 is associated with the information indicating the measurement section (for example, the master identifier 201 and the slave identifier 202) and recorded as delay time information 300 in the memory device (not shown). At this time, the information indicating the measurement section (for example, the master identifier 201 and the slave identifier 202) can be obtained from the Master Switch DPID and the Slave Switch DPID in the IP Data in the packet.

It should be noted that the above-mentioned DPID, Send Packet Message and Modify Flow Entry Message are preferably defined by the OpenFlow Switch Specification version 1.0.0 (Non-Patent Literature 1).

### (Delay Time Measurement Method)

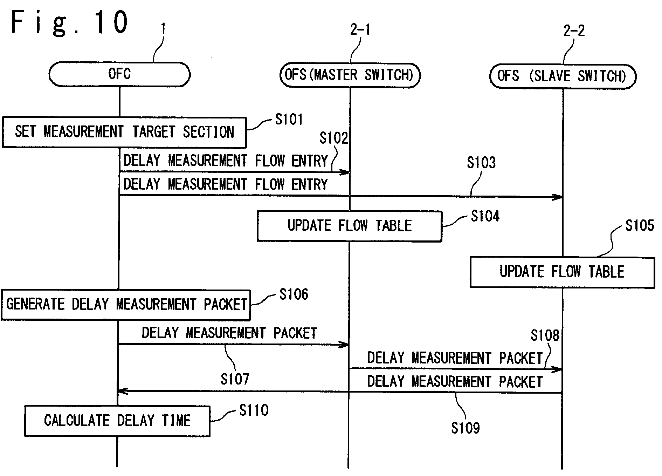

Next, an operation of measuring a delay time (propagation time) in a communication section between two adjacent switches will be described in detail with reference to Fig. 10. Fig. 10 is a view showing an example of the delay time measurement operation in the computer system according to the present invention. Here, let us consider a case where the OFS 2-1 is the master node, the OFS 2-2 is the slave node, and a delay time between the OFS 2-1 and the OFS 2-2 is measured.

First, setting of a section (measurement target section) being a target of the delay time measurement is performed in the OFC 1 (Step S101). In the present example, the section between the OFS 2-1 and the OFS 2-2 is set as the measurement target section, the OFS 2-1 is set as the master switch, and the OFS 2-2 is set as the slave switch. Details of the method of setting the measurement target will be described in "Method of Extracting Minimum Delay Route".

Subsequently, the OFC 1 sets the delay measurement flow entry for the OFS 2-1 and the OFS 2-2 (Steps S101 to S105). More specifically, the OFC 1 transmits the flow entry update message for setting the delay measurement flow entry in the master switch to the OFS 2-1 (Step S102). The OFS 2-1 updates the flow table of the OFS 2-1 in response to the update message (Step S104). As a result, the OFS 2-1 is controlled to forward a received packet that matches the set rule of the delay measurement flow entry to the OFS 2-1 being the slave switch. Also, the OFC 1 transmits the flow entry update message for setting the delay measurement flow entry in the slave switch to the OFS 2-2 (Step S103). The OFS 2-2 updates the flow table of the OFS 2-2 in response to the update message (Step S105) . As a result, the OFS 2-2 is controlled to forward a received packet that matches the set rule of the delay measurement flow entry to the OFC 1. It should be noted that the OFS 2 in which the delay measurement flow entry is registered returns the registration result to the OFC 1. The OFC 1 analyzes the registration result and, if the registration is failed, the OFC 1 issues a re-registration request.

The OFC 1 generates the delay measurement packet and transmits it to the OFS 2-1 that is set as the master switch (Steps S106 and S107). Here, a packet that includes the rule set in the delay measurement flow entry at the Steps S102 and S103 is transmitted as the delay measurement packet to the OFS 2-1. The OFC 1 stamps the transmission time on the packet when generating the delay measurement packet or transmitting it to the OFS 2-1.

If the received packet matches the delay measurement flow entry set in the OFS 2-1, the OFS 2-1 forwards the packet (the delay measurement packet) to the OFS 2-2 (the slave switch) that is set as the forwarding destination in the entry (Step S108). If the received packet matches the delay measurement flow entry set in the OFS 2-2, the OFS 2-2 forwards the packet (the delay measurement packet) to the OFC 1 that is set as the forwarding destination in the entry (Step S109).

When receiving the delay measurement packet, the OFC 1 analyzes the received delay measurement packet to calculate the delay time between the OFS 2-1 and the OFS 2-2 (Step S110) . More specifically, when receiving the delay measurement packet, the OFC 1 stamps the reception time on the timestamp field of the received packet. The OFC 1 calculates the delay time 301 based on a difference between the transmission time and the reception time which are stamped on the delay measurement packet. Then, the OFC 1 records, as the delay time information 300, the correspondence relationship between the delay time 301, the master identifier 201 and the slave identifier 202 that are specified in the packet.

By the above-mentioned operation, it is possible to measure the delay time between the two adjacent OFSs 2. It should be noted that in the present exemplary embodiment, the time from the transmission of the delay measurement packet from the OFC 1 to the arrival at the OFC 1 through the communication section is measured as the delay time 301.

### (Method of Extracting Minimum Delay Route)

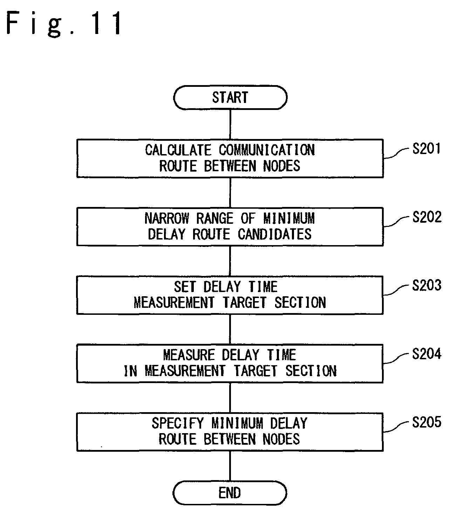

The computer system according to the present invention can extract (select) a route (a minimum delay route) whose delay time is the minimum among a plurality of communication routes connecting between tow nodes, by using the delay time information 300 obtained as described above. A method of extracting the minimum delay route according to the present invention will be described below with reference to Figs. 11 to 13.

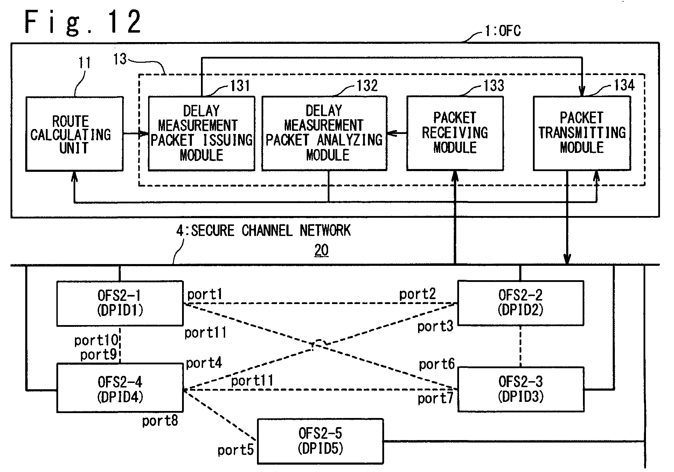

Fig. 11 is a flow chart showing an operation of extracting the minimum delay route according to the present invention. Fig. 12 shows an example of a configuration of a network as a target of the minimum delay route extraction. Here, a system that has five OFS 2-1 to OFS 2-5 managed by one OFC 1 is exemplified, and the method of extracting the minimum delay route between the OFS 2-1 (DPID 1) and the OFS 2-5 (DPID 5) is described. Hereafter, a route between the OFS 2-1 (DPID 1) and the OFS 2-5 (DPID 5) is referred to as a "communication route", and a route between two adjacent OFSs 2 included in the communication route is referred to as a "communication section".

Referring to Figs. 11 and 12, the route calculating unit 11 of the OFC 1 recognizes a connection state of the OFS 2-1 to OFS 2-5 that are detected by topology detection and calculates the communication route between the nodes (here, between the OFS 2-1 and the OFS 2-5) by using the position & connection data 14. Here, the connection state indicated by dotted lines in Fig. 12 and the port numbers of the connection destinations are identified, and the following communication routes (PathA to PathH) are calculated.

PathA: OFS 2-1 → OFS 2-4, OFS 2-4 → OFS 2-5
PathB: OFS 2-1 → OFS 2-4, OFS 2-4 → OFS 2-2, OFS 2-2 → OFS 2-1, OFS 2-1 → OFS 2-3, OFS 2-3 → OFS 2-4, OFS 2-4 → OFS 2-5
PathC: OFS 2-1 → OFS 2-4, OFS 2-4 → OFS 2-3, OFS 2-3 → OFS 2-1, OFS 2-1 → OFS 2-2, OFS 2-2 → OFS 2-4, OFS 2-4 → OFS 2-5
PathD: OFS 2-1 → OFS 2-3, OFS 2-3 → OFS 2-4, OFS 2-4 → OFS 2-2, OFS 2-2 → OFS 2-1, OFS 2-1 → OFS 2-4, OFS 2-4 → OFS 2-5
PathE: OFS 2-1 → OFS 2-3, OFS 2-3 → OFS 2-4, OFS 2-4 → OFS 2-5
PathF: OFS 2-1 → OFS 2-2, OFS 2-2 → OFS 2-4, OFS 2-4 → OFS 2-3, OFS 2-3 → OFS 2-1, OFS 2-1 → OFS 2-4, OFS 2-4 → OFS 2-5
PathG: OFS 2-1 → OFS 2-2, OFS 2-2 → OFS 2-4, OFS 2-4 → OFS 2-3, OFS 2-3 → OFS 2-1, OFS 2-1 → OFS 2-4, OFS 2-4 → OFS 2-5
PathH: OFS 2-1 → OFS 2-2, OFS 2-2 → OFS 2-4, OFS 2-4 → OFS 2-5

Next, the route calculating unit 11 narrows down candidates of the minimum delay route (Step S202). For example, the route calculating unit 11 narrows down the candidates by assuming the communication sections which are included in the respective communication routes (PathA to PathH) as a random-ordered and non-ordered set.

More specifically, if there is a communication route that includes another communication route, the route calculating unit 11 eliminates the communication route from the candidates of the minimum delay route. Here, the PathB and the PathC are eliminated from the candidates because each of them includes the PathA. Also, the PathD is eliminated from the candidates because it includes the PathE. Moreover, the PathF and the PathG are eliminated from the candidates because each of them includes the PathH. Consequently, the following three communication routes remain as the candidates of the minimum delay route.
PathA: OFS 2-1 → OFS 2-4, OFS 2-4 → OFS 2-5
PathE: OFS 2-1 → OFS 2-3, OFS 2-3 → OFS 2-4, OFS 2-4 → OFS 2-5
PathH: OFS 2-1 → OFS 2-2, OFS 2-2 → OFS 2-4, OFS 2-4 → OFS 2-5

It should be noted that the communication section included in the narrowed down candidates is assumed as the random-ordered non-ordered set, and if there are a plurality of same communication routes among the candidates, the route calculating unit 11 leaves any one of them as the minimum delay route candidate.

Next, the route calculating unit 11 sets a communication section being the measurement target in the minimum delay route candidates (Step S203). For example, the route calculating unit 11 assumes the delay time of a communication section shared by all of the minimum delay route candidates to be "0" to eliminate the communication section from the measurement target of the delay time and set the other communication sections as the target sections of the delay time measurement. Here, the delay time of the communication section (OFS 2-4 → OFS 2-5) shared by all of the minimum delay route candidates is assumed to be "0", and the other communication sections (OFS 2-1 → OFS 2-4, OFS 2-1 → OFS 2-3, OFS 2-3 → OFS 2-4, OFS 2-1 → OFS 2-2, and OFS 2-2 → OFS 2-4) are set as the targets of the delay time measurement.

The route calculating unit 11 sets the source side one and the destination side one of the OFSs 2 of the communication section being the measurement target to the master switch and the slave switch, respectively, and records them together with the M to S port number 203 as the measurement target path information 200. For example, in the case of the communication section "OFS 2-1 → OFS 2-2", the OFS 2-1 on the source side is set as the master switch, and the OFS 2-2 is set as the slave switch. In this case, the DPID "DPID 1" of the OFS 2-2 is registered as the master identifier 201, and the DPID "DPID 2" of the OFS 2-2 is registered as the slave identifier 202. Also, the port number "Port1" on the side of the OFS 2-1 connected to the OFS 2-2 is registered as the M to S port number 203. The other communication sections are recorded as the measurement target path information 200 in a similar manner.

When the communication section as the target of the delay time measurement is set, the OFC 1 measures the delay time of the communication section (Step S204). The detail of the method of measuring the delay time is as described in the "Delay Time Measurement Method" as shown in Fig. 10. Here, the delay time 301 of each of the communication sections (OFS 2-1 → OFS 2-4, OFS 2-1 → OFS 2-3, OFS 2-3 → OFS 2-4, OFS 2-1 → OFS 2-2, and OFS 2-2 → OFS 2-4) is measured.

Here, the delay times 301 of the communication sections "OFS 2-1 → OFS 2-4, OFS 2-1 → OFS 2-3, OFS 2-3 → OFS 2-4, OFS 2-1 → OFS 2-2 and OFS 2-2 → OFS 2-4" are defined as "DT14, DT13, DT34, DT12 and DT24", respectively. The delay time 301 of the communication section "OFS 2-4 → OFS 2-5" is defined as "DT45 =0"

When the measurements of the delay times in all of the measurement target sections are completed, the delay measurement packet analyzing module 132 calculates the delay times of the respective candidates of the minimum delay route and specifies the minimum delay route (Step S205). More specifically, at first, the delay measurement packet analyzing module 132 totals the delay times of all the communication sections included in the communication route of the candidates of the communication route. In the case of this exemplary embodiment, the delay time "D_PathA" of the communication route "PathA" is "DT14 + DT45". The delay time "D_PathE" of the communication route "PathE" is "DT13 + DT34 + DT45". And, the delay time "D_PathH" of the communication route "PathH" is "DT12 + DT24 + DT45". Here, considering DT45 = 0, the delay time "D_PathA" of the communication route "PathA" is "DT14", the delay time "D_PathE" of the communication route "PathE" is "DT13 + DT34", and the delay time "D_PathH" of the communication route "PathH" is "DT12 + DT24".

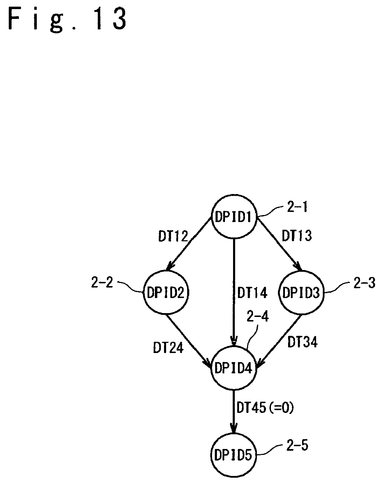

Then, the delay measurement packet analyzing module 132 compares the calculated delay times of the communication routes and specifies the communication route having the minimum delay time as the minimum delay route between the two nodes. For example, in a case of D_PathA > D_PathE > D_PathH, "PathH: OFS 2-1 → OFS 2-2, OFS 2-2 → OFS 2-4 and OFS 2-4 → OFS 2-5" is specified as the minimum delay route. It should be noted that a Dijkstra method may be used as an algorithm for calculating the minimum delay route from the minimum delay route candidates. The input to the Dijkstra method is the weighted directional graph configured by the minimum delay route candidates, and its output is the 2-apex pair minimum delay route. In the case of the present exemplary embodiment, the weighted directional graph for retrieving the minimum delay route is represented by Fig. 13.

In the example shown in Fig. 11, the flow entry for the delay measurement is set after the target sections of the delay time measurement are narrowed down, However, it is not limited thereto. For example, each time the OFS 2 is detected by the topology detection, the communication section that includes the OFS 2 may be identified to set the flow entry for the delay time measurement. However, the method of setting the flow entry for the delay time measurement after identifying the communication section being the target of the delay measurement can not only reduce processing load in the OFC 1 but also reduce the time for identifying the minimum delay route.

As described above, the computer system according to the present invention can measure the delay time in the communication section between the two adjacent OFSs 2 by controlling the forwarding of the delay measurement packet by setting the flow entry for the delay measurement by using the open flow protocol. As a result, it is possible to identify the route of the minimum delay time (the minimum delay route) among the communication routes between the two nodes. That is, according to the present invention, in the system that uses the open flow protocol, it is possible to automatically calculate the communication delay time and perform the route control while avoiding a large delay communication route.

Moreover, according to the present invention, it is possible to identify the minimum delay route with using a configuration based on the conventional open flow protocol (for example, the protocol defined by OpenFlow Switch Specification version 1.0) in its original state as the configuration (for example, the OFS 2) other than the OFC 1. That is, it is possible to achieve the functions of the present invention only by changing the software installed in the open flow controller without adding a new function (hardware installation and software installation) to the open flow switch.

Furthermore, according to the present invention, the open flow protocol is used to perform, in a unified manner by the OFC 1, the identification of the minimum delay route that required a large calculation amount, which can prevent the OFS 2 on the communication route from being subject to the load of the delay time measurement.

Moreover, the delay measurement packet that is forwarded between the OFSs 2 is the IP packet. Therefore, even if a legacy network exists between the OFSs 2, the present invention can be applied.

### 2. Second Exemplary embodiment

The first exemplary embodiment is described with respect to the operation when the minimum delay route is retrieved and calculated between any two OFSs 2 in the network managed by one OFC 1. The second exemplary embodiment is described with respect to the computer system for retrieving the minimum delay route between any two OFSs 2 in networks managed by a plurality of OFCs, respectively.

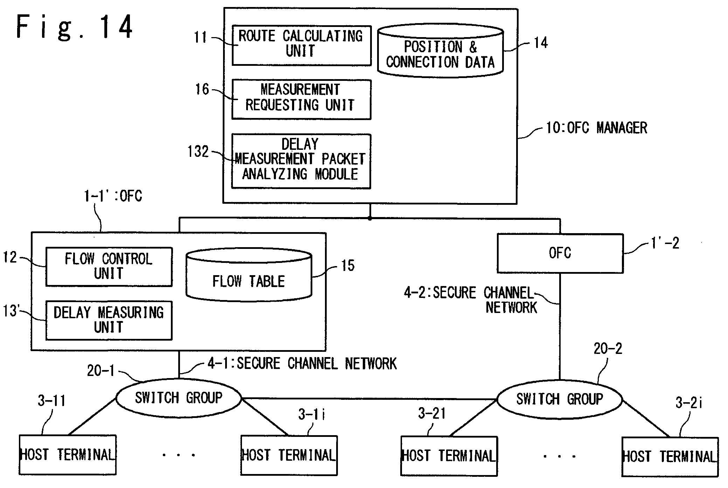

Fig. 14 is a view showing a configuration of the computer system according to the second exemplary embodiment of the present invention. As shown in Fig. 14, the computer system in the second exemplary embodiment has an open flow controller manager 10 (OFC manager 10) and a plurality of OFCs 1' (here, two OFCs 1'-1 and 1'-2 are shown as an example). Hereafter, when the OFC 1'-1 and 1'-1 are described without any discrimination, they are referred to as OFC 1'. The configuration of each of the networks managed the OFC 1'-1 and 1'-2 are similar to that in the first exemplary embodiment. However, the additional suffix as in the case of the OFC 1' is added to each of the configurations.

In the system in the second exemplary embodiment, the route calculating unit 11, the position & connection data 14 and the delay measurement packet analyzing module 132 that are similar to those in the first exemplary embodiment are not installed in the OFC 1' but installed in the OFC manager 10. Moreover, the OFC manager 10 further has a measuring request unit 16 for requesting the OFC 1' to set the flow entry for the delay time measurement. The measuring request unit 16 is recorded on the memory device (recording medium) and achieved by a program executed by CPU that is not shown.

The route calculating unit 11 in the second exemplary embodiment calculates the communication route between any two nodes (for example, two OFSs 2) in the switch groups 20-1 and 20-2 and identifies the communication section between two adjacent OFSs 2 which is the target of the delay time measurement. In the second exemplary embodiment, the two switch groups 20-1 and 20-2 are communicably connected to each other. Thus, the communication section straddling the two switch groups 20-1 and 20-2 can be set as the target section of the delay time measurement.

The OFC 1' in the second exemplary embodiment has the flow control unit 12 and the flow table 15 as in the case of the first exemplary embodiment and a delay measuring unit 13' that does not include the delay measurement packet analyzing module 132. The flow control unit 12 in the second exemplary embodiment sets the flow entry for the delay time measurement which is based on the measurement target path information 200 set by the route calculating unit 11, for the OFS 2 managed by the flow control unit 12. At this time, if the OFS 2 of the setting target is set as the master switch, the flow control unit 12 sets the delay time measurement flow entry whose action is "forwarding the delay measurement packet to the slave switch", for the OFS 2. If the OFS 2 of the setting target is set as the slave switch, the flow control unit 12 sets the delay time measurement flow entry whose action is "forwarding the received delay measurement packet to the OFC 1 to which the flow control unit 12 itself belongs", for the OFS 2. The flow entry set for the OFS 2 is recorded in the flow table. As a result, the OFC 1' can manage the flow entry set for the switch group 20 managed by the OFC 1' itself.

The delay measuring unit 13' generates the delay measurement packet as in the case of the first exemplary embodiment and forwards it to the OFS 2 which is set as the master switch in the switch group 20 managed by the delay measuring unit 13'. Moreover, the delay measuring unit 13' stamps the transmission time when generating or forwarding the delay measurement packet. Also, when receiving the delay measurement packet which is forwarded from the OFS 2, the delay measuring unit 13' stamps the reception time on the received packet. The delay measuring unit 13' forwards the delay measurement packet on which the reception time is stamped to the OFC manager 10.

The delay measurement packet analyzing module 132 of the OFC manager 10 calculates a difference between the transmission time and the reception time of the delay measurement packet obtained from the OFC 1', as the delay time in the communication section between the master switch and the slave switch that are specified in the packet. Moreover, the delay measurement packet analyzing module 132 uses the measured delay time in the communication section to calculate the delay time in the communication route between the two nodes and identify the minimum delay route, as in the case of the first exemplary embodiment. For example, if the delay measurement packet transmitted from the OFC 1'-1 is received by the OFC 1'-2, the transmission time is stamped on the packet by the OFC 1'-1 on the master switch side and the reception time is stamped on the packet by the OFC 1'-2 on the slave switch side. The OFC manager 10 can calculate the delay time in the communication section between the OFSs 2-1 and 2-2 adjacent to each other which straddle the two switch groups 20-1 and 20-2, on the basis of the times stamped on the delay measurement packet notified by the OFC 1'-2.

As described above, according to the present exemplary embodiment, it is possible to specify the minimum delay route from the communication routes between the two nodes straddling the networks managed by the different OFCs 1'. The other effects are similar to those in the first exemplary embodiment. It should be noted that the OFC manager 10 may be installed in any one of the plurality of OFCs 1'. Moreover, the OFC 1' may include the delay measurement packet analyzing module 132 that measures the delay time in the communication section that is limited to inside the switch group 20 managed by the OFC 1' itself and identifies the minimum delay route. In this case, the delay measurement packet analyzing module in the OFC manager 10 is used only when the minimum delay route between the nodes straddling the plurality of networks (the switch groups 20) is specified or when the delay time in the communication section is calculated.

As mentioned above, the exemplary embodiments of the present invention have been described in detail. However, the specific configuration is not limited to the above-mentioned exemplary embodiments. Even the modification in the range without departing from the scope of the present invention should be included in the present invention. For example, in the above-mentioned exemplary embodiments, the flow entry for the delay time measurement is set not only for the master switch but also for the slave switch. However, the setting for the slave switch may be omitted. In this case, the OFS 2 (the slave switch) that receives the delay measurement packet from the OFS 2 (the master switch) notifies the packet which does not match the flow entry, as the first packet to the OFC 1, in accordance with the open flow protocol (PacketIN). The OFC 1 can calculate the delay time in the communication section by stamping the reception time of the first packet notified from the OFS 2 on the packet and analyzing it.

Also, in the above-mentioned exemplary embodiments, the delay time in the communication section is calculated on the basis of the difference between the transmission time from the OFC and the reception time at the OFC. However, the calculation method is not limited thereto. Another algorism can be used for the calculating by using the transmission time and the reception time that are stamped on the packet. Moreover, in the above-mentioned exemplary embodiments, the transmission time and the reception time are stamped by the OFC. However, the stamping is not limited thereto. The transmission time may be stamped by the master switch, and the reception time may be stamped by the slave switch. For example, the stamping function to the packet is added to the OFS, and the stamping of the transmission time is added as the action of the delay time measurement flow entry that is set for the master switch, and the stamping of the reception time (or the transmission time to the OFC) is added as the action of the delay time measurement flow entry that is set for the slave switch. As a result, it is possible to calculate the minimum delay route and the delay time in the communication section from which the delay time between the OFS 2 and the OFC 1 (OFC 1') through the secure channel network 4 is removed. Moreover, the locations where the transmission time and the reception time are stamped are not limited thereto, and the different combination may be used. For example, the transmission time may be stamped in the master switch, and the reception time may be stamped in the OFC. The transmission time may be stamped in the OFC, and the reception time may be stamped in the slave switch.

It should be noted that this application is based upon and claims the benefit of priority from Japanese patent application No. 2010-277399.

## Claims

1. A computer system comprising:
a first switch (2-1) and a second switch (2-2) that are adjacent to each other;
a controller (100) configured to set, for said first switch, a flow entry whose rule is header information of a delay measurement packet and whose action is forwarding to said second switch and to transmit said delay measurement packet to said first switch; and
an analyzing module (132) configured to calculate a delay time in a communication section between said first switch and said second switch,
wherein said first switch forwards said delay measurement packet received from said controller to said second switch, in accordance with said flow entry set in said first switch, and
wherein said analyzing module obtains said delay measurement packet from said second switch and calculates the delay time in said communication section by using a time stamped on said delay measurement packet.

2. The computer system according to claim 1,
wherein said controller (100) sets, for said second switch, a flow entry whose rule is header information of said delay measurement packet and whose action is forwarding to said controller,
wherein said second switch forwards said delay measurement packet received from said first switch to said controller, in accordance with said flow entry set in said second switch, and
wherein said analyzing module (132) obtains said delay measurement packet forwarded to said controller and calculates said delay time by using the time stamped on said delay measurement packet.

3. The computer system according to claim 1,
wherein said second switch forwards a received packet that does not match any rule in flow entries set in said second switch, as a first packet, to said controller, and
wherein said analyzing module (132) obtains said delay measurement packet forwarded to said controller and calculates the delay time in said communication section by using a time stamped on said delay measurement packet.

4. The computer system according to any one of claims 1 to 3,
wherein said controller (100) transmits said delay measurement packet to said first switch after stamping a transmission time on said delay measurement packet and also stamps a reception time on said delay measurement packet received from said second switch, and
wherein said analyzing module (132) obtains said delay measurement packet forwarded to said controller and calculates the delay time in said communication section by using said transmission time and said reception time stamped on said delay measurement packet.

5. The computer system according to claim 1, further comprising: another controller (1'-2) configured to set, for said second switch, a flow entry whose rule is header information of said delay measurement packet and whose action is forwarding to said another controller,
wherein said second switch forwards said delay measurement packet received from said first switch to said another controller, in accordance with said flow entry set in said second switch, and
wherein said analyzing module (132) obtains said delay measurement packet forwarded to said another controller and calculates the delay time in said communication section by using the time stamped on said delay measurement packet.

6. The computer system according to claim 5,
wherein said controller transmits said delay measurement packet to said first switch after stamping a transmission time on said delay measurement packet,
wherein said another controller stamps a reception time on said delay measurement packet received from said second switch, and
wherein said analyzing module (132) obtains said delay measurement packet forwarded to said controller and calculates the delay time in said communication section by using said transmission time and said reception time stamped on said delay measurement packet.

7. The computer system according to any one of claims 1 to 6,
wherein said first switch (2-1) transmits said delay measurement packet to said second switch after stamping a transmission time on said delay measurement packet,
wherein said second switch (2-2) stamps a reception time of said delay measurement packet on said delay measurement packet, and
wherein said analyzing module (132) calculates the delay time in said communication section by using said transmission time and said reception time stamped on said delay measurement packet.

8. The computer system according to claim 2,
wherein said controller (100) sets, for said first switch, a flow entry whose rule is header information of said delay measurement packet and whose action is stamping a transmission time on said delay measurement packet and forwarding to said second switch, and sets, for said second switch, a flow entry whose rule is header information of said delay measurement packet and whose action is stamping a reception time on said delay measurement packet and forwarding to said controller,
wherein said first switch stamps said transmission time on said delay measurement packet received from said controller and then forwards said delay measurement packet to said second switch, in accordance with said flow entry set in said first switch,
wherein said second switch stamps said reception time on said delay measurement packet received from said first switch and then forwards said delay measurement packet to said controller, in accordance with said flow entry set in said second switch, and
wherein said analyzing module (132) obtains said delay measurement packet forwarded to said controller and calculates the delay time in said communication section by using said transmission time and said reception time stamped on said delay measurement packet.

9. The computer system according to claim 5,
wherein said controller sets, for said first switch, a flow entry whose rule is header information of said delay measurement packet and whose action is stamping a transmission time on said delay measurement packet and forwarding to said second switch,
wherein said another controller sets, for said second switch, a flow entry whose rule is header information of said delay measurement packet and whose action is stamping a reception time on said delay measurement packet and forwarding to said controller,
wherein said first switch stamps said transmission time on said delay measurement packet received from said controller and then forwards said delay measurement packet to said second switch, in accordance with said flow entry set in said first switch,
wherein said second switch stamps said reception time on said delay measurement packet received from said first switch and then forwards said delay measurement packet to said controller, in accordance with said flow entry set in said second switch, and
wherein said analyzing module obtains said delay measurement packet forwarded to said controller and calculates the delay time in said communication section by using said transmission time and said reception time stamped on said delay measurement packet.

10. The computer system according to any one of claims 1 to 9,
wherein protocol in IP (Internet Protocol) header field is defined as the rule of the flow entry for forwarding said delay measurement packet,
wherein if the protocol in the IP header field of a received packet matches the rule of said flow entry set in said first switch, said first switch forwards said received packet to said second switch irrespective of content of other layers in the header information of said received packet.

11. The computer system according to any one of claims 1 to 10, further comprising: a plurality of switches (2-1 ... 2-n) including said first switch and said second switch,
wherein a plurality of communication routes are formed between two switches of said plurality of switches,
wherein said analyzing module calculates respective delay times in said plurality of communication routes by using said delay time measurement packet to measure a delay time in a communication section between two adjacent switches included in each of said plurality of communication routes, and determines a communication route whose delay time is minimum among said plurality of communication routes as a minimum delay route.

12. The computer system according to claim 11,
wherein each of said plurality of communication routes comprises at least one communication section formed by the two adjacent switches,
wherein said analyzing module sets a delay time in a communication section shared by all of said plurality of communication routes to 0 and sets another communication section as a target of delay time measurement by using said delay measurement packet.

13. A controller (1) comprising:
a flow control unit (12) configured to set, for a first switch, a flow entry whose rule is header information of a delay measurement packet and whose action is forwarding to a second switch adjacent to said first switch; and
a delay measuring unit (13) configured to transmit said delay measurement packet to said first switch,
wherein said delay measuring unit obtains said delay measurement packet that is forwarded from said first switch to said second switch in accordance with said flow entry, and
wherein said delay measuring unit calculates a delay time in a communication section between said first switch and said second switch by using a time stamped on said delay measurement packet.

14. The controller according to claim 13,
wherein said flow control unit (12) sets, for said second switch, a flow entry whose rule is header information of said delay measurement packet and whose action is forwarding to said controller, and
wherein said delay measuring unit (13) obtains said delay measurement packet that is forwarded from said second switch in accordance with said flow entry, and
wherein said delay measuring unit (13) calculates the delay time in said communication section by using a time stamped on said delay measurement packet.

15. The controller according to claim 13,
wherein said delay measuring unit (13) obtains said delay measurement packet being a packet that does not match any rule in flow entries set in said second switch and is forwarded from said second switch, and calculates the delay time in said communication section by using a time stamped on said delay measurement packet.

16. The controller according to any one of claims 13 to 15,
wherein said delay measuring unit (13) transmits said delay measurement packet to said first switch after stamping a transmission time on said delay measurement packet and also stamps a reception time on said delay measurement packet received from said second switch, and
wherein said delay measuring unit (13) calculates the delay time in said communication section by using said transmission time and said reception time.

17. The controller according to claim 14,
wherein said flow control unit (12) sets, for said first switch, a flow entry whose rule is header information of said delay measurement packet and whose action is stamping a transmission time on said delay measurement packet and forwarding to said second switch, and sets, for said second switch, a flow entry whose rule is header information of said delay measurement packet and whose action is stamping a reception time on said delay measurement packet and forwarding to said controller,
wherein said first switch stamps said transmission time on said delay measurement packet received from said controller and then forwards said delay measurement packet to said second switch, in accordance with said flow entry set in said first switch,
wherein said second switch stamps said reception time on said delay measurement packet received from said first switch and then forwards said delay measurement packet to said controller, in accordance with said flow entry set in said second switch, and
wherein said delay measuring unit (13) obtains said delay measurement packet forwarded from said second switch and calculates the delay time in said communication section by using said transmission time and said reception time stamped on said delay measurement packet.

18. The controller according to any one of claims 13 to 17,
wherein a plurality of communication routes are formed between two switches of a plurality of switches,
wherein said delay measuring unit (13) calculates respective delay times in said plurality of communication routes by using said delay time measurement packet to measure a delay time in a communication section between two adjacent switches included in each of said plurality of communication routes, and determines a communication route whose delay time is minimum among said plurality of communication routes as a minimum delay route.

19. The controller according to claim 18,
wherein said delay measuring unit (13) calculates respective delay times in said plurality of communication routes by setting a delay time in a communication section shared by all of said plurality of communication routes to 0 and by using said delay time measurement packet to measure a delay time in another communication section.

20. A recording medium on which a program is recorded,
wherein the program achieves, when executed by a computer, a function of the controller according to any one of claims 13 to 19.

21. A communication route analysis method comprising:
a step of setting, by a controller, for a first switch, a flow entry whose rule is header information of a delay measurement packet and whose action is forwarding to a second switch adjacent to said first switch;
a step of transmitting, by said controller, said delay measurement packet to said first switch;
a step of forwarding, by said first switch, said delay measurement packet received from said controller to said second switch, in accordance with said flow entry set in said first switch; and
a step of obtaining, by an analyzing module, said delay measurement packet from said second switch and calculating the delay time in said communication section by using a time stamped on said delay measurement packet.

22. The communication route analysis method according to claim 21, further comprising:
a step of setting, by said controller, for said second switch, a flow entry whose rule is header information of said delay measurement packet and whose action is forwarding to said controller; and
a step of forwarding, by said second switch, said delay measurement packet received from said first switch to said controller, in accordance with said flow entry set in said second switch,
wherein the step of calculating the delay time in said communication section comprises: a step of obtaining, by said analyzing module, said delay measurement packet forwarded to said controller and calculating said delay time by using the time stamped on said delay measurement packet.

23. The communication route analysis method according to claim 21, further comprising: a step of forwarding, by said second switch, a received packet that does not match any rule in flow entries set in said second switch, as a first packet, to said controller,
wherein the step of calculating the delay time in said communication section comprises: a step of obtaining, by said analyzing module, said delay measurement packet forwarded to said controller and calculating said delay time by using a time stamped on said delay measurement packet.

24. The communication route analysis method according to any one of claims 21 to 23, further comprising:
a step of transmitting, by said controller, said delay measurement packet to said first switch after stamping a transmission time on said delay measurement packet; and
a step of stamping, by said controller, a reception time on said delay measurement packet received from said second switch,
wherein the step of calculating the delay time in said communication section comprises: a step of obtaining, by said analyzing module, said delay measurement packet forwarded to said controller and calculating the delay time in said communication section by using said transmission time and said reception time stamped on said delay measurement packet.

25. The communication route analysis method according to claim 21, further comprising:
a step of setting, by another controller, for said second switch, a flow entry whose rule is header information of said delay measurement packet and whose action is forwarding to said another controller; and
a step of forwarding, by said second switch, said delay measurement packet received from said first switch to said another controller, in accordance with said flow entry set in said second switch,
wherein the step of calculating the delay time in said communication section comprises: a step of obtaining, by said analyzing module, said delay measurement packet forwarded to said another controller and calculating the delay time in said communication section by using the time stamped on said delay measurement packet.

26. The communication route analysis method according to claim 25, further comprising:
a step of transmitting, by said controller, said delay measurement packet to said first switch after stamping a transmission time on said delay measurement packet; and
a step of stamping, by said another controller, a reception time on said delay measurement packet received from said second switch,
wherein the step of calculating the delay time in said communication section comprises: a step of obtaining, by said analyzing module, said delay measurement packet forwarded to said controller and calculating the delay time in said communication section by using said transmission time and said reception time stamped on said delay measurement packet.

27. The communication route analysis method according to any one of claims 21 to 26, further comprising:
a step of using, by said analyzing module, said delay time measurement packet to measure a delay time in a communication section between two adjacent switches included in each of a plurality of communication routes formed between two switches of a plurality of switches;
a step of calculating, by said analyzing module, respective delay times in said plurality of communication routes by using the measured delay time in said communication section; and
a step of comparing, by said analyzing module, the calculated delay times in the respective communication routes to determine a communication route whose delay time is minimum among said plurality of communication routes as a minimum delay route.

28. The communication route analysis method according to claim 27,
wherein the step of using said delay time measurement packet to measure the delay time comprises: a step of setting, by said analyzing module, a delay time in a communication section shared by all of said plurality of communication routes to 0 and setting a delay time in another communication section as a target of measurement by using said delay measurement packet.

## Patentansprüche

1. Computersystem mit:
einem ersten Schalter (2-1) und einem zweiten Schalter (2-2), die benachbart zueinander angeordnet sind;
einer Steuereinheit (100), die dafür konfiguriert ist, für den ersten Schalter einen Flusseintrag zu setzen, dessen Regel Header-Information eines Verzögerungsmesspakets ist, und dessen Wirkung das Weiterleiten an einen zweiten Schalter ist, und das Verzögerungsmesspaket an den ersten Schalter zu übertragen; und
einem Analysemodul (132), das dafür konfiguriert ist, eine Verzögerungszeit in einem Kommunikationsabschnitt zwischen dem ersten Schalter und dem zweiten Schalter zu berechnen,
wobei der erste Schalter das von der Steuereinheit empfangene Verzögerungsmesspaket gemäß dem im ersten Schalter gesetzten Flusseintrag an den zweiten Schalter weiterleitet, und
wobei das Analysemodul das Paketverzögerungsmesspaket vom zweiten Schalter empfängt und die Verzögerungszeit im Kommunikationsabschnitt unter Verwendung einer auf das Verzögerungsmesspaket gestempelten Zeit berechnet.

2. Computersystem nach Anspruch 1,
wobei die Steuereinheit (100) für den zweiten Schalter einen Flusseintrag setzt, dessen Regel Header-Information des Verzögerungsmesspakets ist, und dessen Wirkung das Weiterleiten an die Steuereinheit ist,
wobei der zweite Schalter das vom ersten Schalter empfangene Verzögerungsmesspaket gemäß dem im zweiten Schalter gesetzten Flusseintrag an die Steuereinheit weiterleitet, und
wobei das Analysemodul (132) das an die Steuereinheit weitergeleitete Verzögerungsmesspaket erhält und die Verzögerungszeit unter Verwendung der auf das Verzögerungsmesspaket gestempelten Zeit berechnet.

3. Computersystem nach Anspruch 1,
wobei der zweite Schalter ein empfangenes Paket, das mit keiner Regel in den im zweiten Schalter gesetzten Flusseinträgen übereinstimmt, als ein erstes Paket an die Steuereinheit weiterleitet, und
wobei das Analysemodul (132) das an die Steuereinheit weitergeleitete Verzögerungsmesspaket erhält und die Verzögerungszeit im Kommunikationsabschnitt unter Verwendung einer auf das Verzögerungsmesspaket gestempelten Zeit berechnet.

4. Computersystem nach einem der Ansprüche 1 bis 3,
wobei die Steuereinheit (100) das Verzögerungsmesspaket an den ersten Schalter überträgt, nachdem eine Übertragungszeit auf das Verzögerungsmesspaket gestempelt wurde, und außerdem eine Empfangszeit auf das vom zweiten Schalter empfangene Verzögerungsmesspaket stempelt, und
wobei das Analysemodul (132) das an die Steuereinheit weitergeleitete Verzögerungsmesspaket erhält und die Verzögerungszeit im Kommunikationsabschnitt unter Verwendung der Übertragungszeit und der Empfangszeit berechnet, die auf das Verzögerungsmesspaket gestempelt wurden.

5. Computersystem nach Anspruch 1, ferner mit einer anderen Steuereinheit (1'-2), die dafür konfiguriert ist, für den zweiten Schalter einen Flusseintrag zu setzen, dessen Regel Header-Information des Verzögerungsmesspakets ist, und dessen Wirkung das Weiterleiten an die andere Steuereinheit ist,
wobei der zweite Schalter das vom ersten Schalter empfangene Verzögerungsmesspakets gemäß dem im zweiten Schalter gesetzten Flusseintrag an die andere Steuereinheit weiterleitet, und
wobei das Analysemodul (132) das an die andere Steuereinheit weitergeleitete Verzögerungsmesspaket erhält und die Verzögerungszeit im Kommunikationsabschnitt unter Verwendung der auf das Verzögerungsmesspaket gestempelten Zeit berechnet.

6. Computersystem nach Anspruch 5,
wobei die Steuereinheit das Verzögerungsmesspaket an den ersten Schalter überträgt, nachdem eine Übertragungszeit auf das Verzögerungsmesspaket gestempelt wurde,
wobei die andere Steuereinheit eine Empfangszeit auf das vom zweiten Schalter empfangene Verzögerungsmesspaket stempelt, und
wobei das Analysemodul (132) das an die Steuereinheit weitergeleitete Verzögerungsmesspaket erhält und die Verzögerungszeit im Kommunikationsabschnitt unter Verwendung der Übertragungszeit und der Empfangszeit berechnet, die auf das Verzögerungsmesspaket gestempelt wurden.

7. Computersystem nach einem der Ansprüche 1 bis 6,
wobei der erste Schalter (2-1) das Verzögerungsmesspaket an den zweiten Schalter überträgt, nachdem eine Übertragungszeit auf das Verzögerungsmesspaket gestempelt wurde,
wobei der zweite Schalter (2-2) eine Empfangszeit des Verzögerungsmesspakets auf das Verzögerungsmesspaket stempelt, und
wobei das Analysemodul (132) die Verzögerungszeit im Kommunikationsabschnitt unter Verwendung der Übertragungszeit und der Empfangszeit berechnet, die auf das Verzögerungsmesspaket gestempelt wurden.

8. Computersystem nach Anspruch 2,
wobei die Steuereinheit (100) für den ersten Schalter einen Flusseintrag setzt, dessen Regel Header-Information des Verzögerungsmesspakets ist, und dessen Wirkung das Stempeln einer Übertragungszeit auf das Verzögerungsmesspaket und das Weiterleiten an den zweiten Schalter ist, und für den zweiten Schalter einen Flusseintrag setzt, dessen Regel Header-Information des Verzögerungsmesspakets ist, und dessen Wirkung das Stempeln einer Empfangszeit auf das Verzögerungsmesspaket und das Weiterleiten an die Steuereinheit ist,
wobei der erste Schalter die Übertragungszeit auf das von der Steuereinheit empfangene Verzögerungsmesspaket stempelt und dann das Verzögerungsmesspaket gemäß dem im ersten Schalter gesetzten Flusseintrag an den zweiten Schalter weiterleitet,
wobei der zweite Schalter die Empfangszeit auf das vom ersten Schalter empfangene Verzögerungsmesspaket stempelt und dann das Verzögerungsmesspaket gemäß dem im zweiten Schalter gesetzten Flusseintrag an die Steuereinheit weiterleitet, und
wobei das Analysemodul (132) das an die Steuereinheit weitergeleitete Verzögerungsmesspaket erhält und die Verzögerungszeit im Kommunikationsabschnitt unter Verwendung der Übertragungszeit und der Empfangszeit berechnet, die auf das Verzögerungsmesspaket gestempelt wurden.

9. Computersystem nach Anspruch 5,
wobei die Steuereinheit für den ersten Schalter einen Flusseintrag setzt, dessen Regel Header-Information des Verzögerungsmesspakets ist und dessen Wirkung das Stempeln einer Übertragungszeit auf das Verzögerungsmesspaket und das Weiterleiten an den zweiten Schalters ist,
wobei die andere Steuereinheit für den zweiten Schalter einen Flusseintrag setzt, dessen Regel Header-Information des Verzögerungsmesspakets ist, und dessen Wirkung das Stempeln einer Empfangszeit auf das Verzögerungsmesspaket und das Weiterleiten an die Steuereinheit ist,
wobei der erste Schalter die Übertragungszeit auf das von der Steuereinheit empfangene Verzögerungsmesspaket stempelt und dann das Verzögerungsmesspaket gemäß dem im ersten Schalter gesetzten Flusseintrag an den zweiten Schalter weiterleitet,
wobei der zweite Schalter die Empfangszeit auf das vom ersten Schalter empfangene Verzögerungsmesspaket stempelt und dann das Verzögerungsmesspaket gemäß dem im zweiten Schalter gesetzten Flusseintrag an die Steuereinheit weiterleitet, und
wobei das Analysemodul das an die Steuereinheit weitergeleitete Verzögerungsmesspaket erhält und die Verzögerungszeit im Kommunikationsabschnitt unter Verwendung der Übertragungszeit und der Empfangszeit berechnet, die auf das Verzögerungsmesspaket gestempelt wurden.

10. Computersystem nach einem der Ansprüche 1 bis 9,
wobei das Protokoll im IP- (Internet Protocol) Header-Feld als die Regel des Flusseintrags für das Weiterleiten des Verzögerungsmesspakets definiert ist,
wobei, wenn das Protokoll im IP-Header-Feld eines empfangenen Pakets mit der Regel des im ersten Schalter gesetzten Flusseintrags übereinstimmt, der erste Schalter das empfangene Paket unabhängig von Inhalt anderer Schichten in der Header-Information des empfangenen Pakets an den zweiten Schalter weiterleitet.

11. Computersystem nach einem der Ansprüche 1 bis 10, ferner mit: mehreren Schaltern (2-1 ... 2-n), die den ersten Schalter und den zweiten Schalter einschließen,
wobei mehrere Kommunikationsstrecken zwischen zwei Schaltern der mehreren Schalter ausgebildet sind, und
wobei das Analysemodul jeweilige Verzögerungszeiten auf den mehreren Kommunikationsstrecken unter Verwendung des Verzögerungszeitmesspakets berechnet, um eine Verzögerungszeit in einem Kommunikationsabschnitt zwischen zwei benachbarten Schaltern zu messen, die in jedem der mehreren Kommunikationsstrecken enthalten sind, und eine Kommunikationsstrecke, deren Verzögerungszeit minimal ist, unter den mehreren Kommunikationsstrecken als Strecke mit minimaler Verzögerung bestimmt.

12. Computersystem nach Anspruch 11,
wobei jede der mehreren Kommunikationsstrecken mindestens einen Kommunikationsabschnitt aufweist, der durch die zwei benachbarten Schalter gebildet wird,
wobei das Analysemodul eine Verzögerungszeit in einem Kommunikationsabschnitt, der von allen der mehreren Kommunikationsstrecken gemeinsam verwendet wird, auf 0 setzt und einen weiteren Kommunikationsabschnitt unter Verwendung des Verzögerungsmesspakets als ein Ziel der Verzögerungszeitmessung setzt.

13. Steuereinrichtung (1), mit:
einer Flusssteuereinheit (12), die dafür konfiguriert ist, für einen ersten Schalter einen Flusseintrag zu setzen, dessen Regel Header-Information eines Verzögerungsmesspakets ist, und dessen Wirkung das Weiterleiten an einen dem ersten Schalter benachbarten zweiten Schalter ist; und
einer Verzögerungsmesseinheit (13), die dafür konfiguriert ist, das Verzögerungsmesspaket an den ersten Schalter zu übertragen,
wobei die Verzögerungsmesseinheit das Verzögerungsmesspaket erhält, das gemäß dem Flusseintrag vom ersten Schalter an den zweiten Schalter weitergeleitet wurde, und
wobei die Verzögerungsmesseinheit eine Verzögerungszeit in einem Kommunikationsabschnitt zwischen dem ersten Schalter und dem zweiten Schalter unter Verwendung einer auf das Verzögerungsmesspaket gestempelten Zeit berechnet.

14. Steuerung nach Anspruch 13,
wobei die Flusssteuereinheit (12) für den zweiten Schalter einen Flusseintrag setzt, dessen Regel Header-Information des Verzögerungsmesspakets ist, und dessen Wirkung das Weiterleiten an die Steuereinheit ist,
wobei die Verzögerungsmesseinheit (13) das Verzögerungsmesspaket erhält, das gemäß dem Flusseintrag vom zweiten Schalter weitergeleitet wurde, und
wobei die Verzögerungsmesseinheit (13) die Verzögerungszeit im Kommunikationsabschnitt unter Verwendung einer auf das Verzögerungsmesspaket gestempelten Zeit berechnet.

15. Steuereinheit nach Anspruch 13,
wobei die Verzögerungsmesseinheit (13) das Verzögerungsmesspaket erhält, das ein Paket ist, das mit keiner Regel in Flusseinträgen übereinstimmt, die im zweiten Schalter gesetzt sind, und das vom zweiten Schalter weitergeleitet wurde, und die Verzögerungszeit im Kommunikationsabschnitt unter Verwendung einer auf das Verzögerungsmesspaket gestempelten Zeit berechnet.

16. Steuereinheit nach einem der Ansprüche 13 bis 15,
wobei die Verzögerungsmesseinheit (13) das Verzögerungsmesspaket an den ersten Schalter überträgt, nachdem eine Übertragungszeit auf das Verzögerungsmesspaket gestempelt wurde, und nachdem außerdem eine Empfangszeit auf das vom zweiten Schalter empfangene Verzögerungsmesspaket gestempelt wurde, und
wobei die Verzögerungsmesseinheit (13) die Verzögerungszeit im Kommunikationsabschnitt unter Verwendung der Übertragungszeit und der Empfangszeit berechnet.

17. Steuereinheit nach Anspruch 14,
wobei die Flusssteuereinheit (12) für den ersten Schalter einen Flusseintrag setzt, dessen Regel Header-Information des Verzögerungsmesspakets ist, und dessen Wirkung das Stempeln einer Übertragungszeit auf das Verzögerungsmesspaket und das Weiterleiten an den zweiten Schalter ist, und für den zweiten Schalter einen Flusseintrag setzt, dessen Regel Header-Information des Verzögerungsmesspakets ist, und dessen Wirkung das Stempeln der Empfangszeit auf das Verzögerungsmesspaket und das Weiterleiten an die Steuereinheit ist,
wobei der erste Schalter die Übertragungszeit auf das von der Steuereinheit empfangene Verzögerungsmesspaket stempelt und dann das Verzögerungsmesspaket gemäß dem im ersten Schalter gesetzten Flusseintrag an den zweiten Schalter weiterleitet,
wobei der zweite Schalter die Empfangszeit auf das vom ersten Schalter empfangene Verzögerungsmesspaket stempelt und dann das Verzögerungsmesspaket gemäß dem im zweiten Schalter gesetzten Flusseintrag an die Steuereinheit weiterleitet, und
wobei die Verzögerungsmesseinheit (13) das vom zweiten Schalter weitergeleitete Verzögerungsmesspaket erhält und die Verzögerungszeit im Kommunikationsabschnitt unter Verwendung der Übertragungszeit und der Empfangszeit berechnet, die auf das Verzögerungsmesspaket gestempelt wurden.

18. Steuereinheit nach einem der Ansprüche 13 bis 17,
wobei mehrere Kommunikationsstrecken zwischen zwei Schaltern von mehreren Schaltern ausgebildet sind,
wobei die Verzögerungsmesseinheit (13) jeweilige Verzögerungszeiten auf den mehreren Kommunikationsstrecken unter Verwendung des Verzögerungszeitmesspakets berechnet, um eine Verzögerungszeit in einem Kommunikationsabschnitt zwischen zwei benachbarten Schaltern zu messen, die auf jeder der mehreren Kommunikationsstrecken enthalten sind, und eine Kommunikationsstrecke, deren Verzögerungszeit minimal ist, unter den mehreren Kommunikationsstrecken als Strecke mit minimaler Verzögerung bestimmt.

19. Steuereinheit nach Anspruch 18,
wobei die Verzögerungsmesseinheit (13) jeweilige Verzögerungszeiten auf den mehreren Kommunikationsstrecken berechnet, indem eine Verzögerungszeit in einem Kommunikationsabschnitt, der von allen der mehreren Kommunikationsstrecken gemeinsam verwendet wird, auf 0 gesetzt wird, und unter Verwendung des Verzögerungszeitmesspakets, um eine Verzögerungszeit in einem anderen Kommunikationsabschnitt zu messen.

20. Speichermedium, auf dem ein Programm gespeichert ist,
wobei das Programm, wenn es durch einen Computer ausgeführt wird, eine Funktion der Steuereinheit nach einem der Ansprüche 13 bis 19 implementiert.

21. Kommunikationsstreckenanalyseverfahren, mit:
einem Schritt zum Setzen eines Flusseintrags für einen ersten Schalter durch eine Steuereinheit, dessen Regel Header-Information eines Verzögerungsmesspakets ist, und dessen Wirkung das Weiterleiten an einen dem ersten Schalter benachbarten zweiten Schalter ist;
einem Schritt zum Übertragen des Verzögerungsmesspakets an den ersten Schalter durch die Steuereinheit;
einem Schritt zum Weiterleiten des von der Steuereinheit empfangenen Verzögerungsmesspakets an den zweiten Schalter durch den ersten Schalter gemäß dem im ersten Schalter gesetzten Flusseintrag; und
einem Schritt zum Erhalten des Verzögerungsmesspakets vom zweiten Schalter und Berechnen der Verzögerungszeit im Kommunikationsabschnitt unter Verwendung einer auf das Verzögerungsmesspaket gestempelten Zeit durch ein Analysemodul.

22. Kommunikationsstreckenanalyseverfahren nach Anspruch 21, ferner mit:
einem Schritt zum Setzen eines Flusseintrags, dessen Regel Header-Information des Verzögerungsmesspakets ist, und dessen Wirkung das Weiterleiten an die Steuereinheit ist, für den zweiten Schalter durch die Steuereinheit; und
einem Schritt zum Weiterleiten des vom ersten Schalter empfangenen Verzögerungsmesspakets an die Steuereinheit durch den zweiten Schalter gemäß dem im zweiten Schalter gesetzten Flusseintrag,
wobei der Schritt zum Berechnen der Verzögerungszeit im Kommunikationsabschnitt aufweist: einen Schritt zum Erhalten des an die Steuereinheit weitergeleiteten Verzögerungsmesspakets durch das Analysemodul und zum Berechnen der Verzögerungszeit unter Verwendung der auf das Verzögerungsmesspaket gestempelten Zeit.

23. Kommunikationsstreckenanalyseverfahren nach Anspruch 21, ferner mit: einem Schritt zum Weiterleiten eines empfangenen Pakets, das mit keiner Regel in im zweiten Schalter gesetzten Flusseinträgen übereinstimmt, als ein erstes Paket durch den zweiten Schalter an die Steuereinheit,
wobei der Schritt zum Berechnen der Verzögerungszeit im Kommunikationsabschnitt aufweist: einen Schritt zum Erhalten des an die Steuereinheit weitergeleiteten Verzögerungsmesspakets durch das Analysemodul und Berechnen der Verzögerungszeit unter Verwendung einer auf das Verzögerungsmesspaket gestempelten Zeit.

24. Kommunikationsstreckenanalyseverfahren nach einem der Ansprüche 21 bis 23, ferner mit:
einem Schritt zum Übertragen des Verzögerungsmesspakets durch die Steuereinheit an den ersten Schalter, nachdem eine Übertragungszeit auf das Verzögerungsmesspaket gestempelt wurde; und
einem Schritt zum Stempeln einer Empfangszeit auf das vom zweiten Schalter empfangene Verzögerungsmesspaket durch die Steuereinheit,
wobei der Schritt zum Berechnen der Verzögerungszeit im Kommunikationsabschnitt aufweist: einen Schritt zum Erhalten des an die Steuereinheit weitergeleiteten Verzögerungsmesspakets durch das Analysemodul und zum Berechnen der Verzögerungszeit im Kommunikationsabschnitt unter Verwendung der Übertragungszeit und der Empfangszeit, die auf das Verzögerungsmesspaket gestempelt wurden.

25. Kommunikationsstreckenanalyseverfahren nach Anspruch 21, ferner mit:
einem Schritt zum Setzen eines Flusseintrags für den zweiten Schalter durch eine andere Steuereinheit, dessen Regel Header-Information des Verzögerungsmesspakets ist, und dessen Wirkung das Weiterleiten an die andere Steuereinheit ist; und
einem Schritt zum Weiterleiten des vom ersten Schalter empfangenen Verzögerungsmesspakets an die andere Steuereinheit gemäß dem im zweiten Schalter gesetzten Flusseintrag durch den zweiten Schalter,
wobei der Schritt zum Berechnen der Verzögerungszeit im Kommunikationsabschnitt aufweist: einen Schritt zum Erhalten des an die andere Steuereinheit weitergeleiteten Verzögerungsmesspakets durch das Analysemodul und zum Berechnen der Verzögerungszeit im Kommunikationsabschnitt unter Verwendung der auf das Verzögerungsmesspaket gestempelten Zeit.

26. Kommunikationsstreckenanalyseverfahren nach Anspruch 25, ferner mit:
einem Schritt zum Übertragen des Verzögerungsmesspakets an den ersten Schalter durch die Steuereinheit, nachdem eine Übertragungszeit auf das Verzögerungsmesspaket gestempelt wurde; und
einem Schritt zum Stempeln einer Empfangszeit auf das vom zweiten Schalter empfangene Verzögerungsmesspaket durch die andere Steuereinheit,
wobei der Schritt zum Berechnen der Verzögerungszeit im Kommunikationsabschnitt aufweist: einen Schritt zum Erhalten des an die Steuereinheit weitergeleiteten Verzögerungsmesspakets durch das Analysemodul und zum Berechnen der Verzögerungszeit im Kommunikationsabschnitt unter Verwendung der Übertragungszeit und der Empfangszeit, die auf das Verzögerungsmesspaket gestempelt wurden.

27. Kommunikationsstreckenanalyseverfahren nach einem der Ansprüche 21 bis 26, ferner mit:
einem Schritt zum Verwenden des Verzögerungszeitmesspakets zum Messen einer Verzögerungszeit in einem Kommunikationsabschnitt zwischen zwei benachbarten Schaltern, die in jeder von mehreren Kommunikationsstrecken enthalten sind, die zwischen zwei Schaltern von mehreren Schaltern ausgebildet sind, durch das Analysemodul;
einem Schritt zum Berechnen jeweiliger Verzögerungszeiten auf den mehreren Kommunikationsstrecken unter Verwendung der gemessenen Verzögerungszeit im Kommunikationsabschnitt durch das Analysemodul; und
einem Schritt zum Vergleichen der berechneten Verzögerungszeiten auf den jeweiligen Kommunikationsstrecken durch das Analysemodul zum Bestimmen einer Kommunikationsstrecke, deren Verzögerungszeit minimal ist, unter den mehreren Kommunikationsstrecken als eine Strecke mit minimaler Verzögerung.

28. Kommunikationsstreckenanalyseverfahren nach Anspruch 27,
wobei der Schritt zum Verwenden des Verzögerungszeitmesspakets zum Messen der Verzögerungszeit aufweist: einen Schritt zum Setzen einer Verzögerungszeit in einem Kommunikationsabschnitt, der von allen der mehreren Kommunikationsstrecken gemeinsam verwendet wird, auf 0 und Setzen einer Verzögerungszeit in einem anderen Kommunikationsabschnitt als ein Ziel der Messung unter Verwendung des Verzögerungsmesspakets durch das Analysemodul.

## Revendications

1. Système informatique comprenant :
un premier commutateur (2-1) et un second commutateur (2-2) qui sont adjacents l'un à l'autre ;
un dispositif de commande (100) configuré pour établir, pour ledit premier commutateur, une entrée de flux dont une règle est une information d'en-tête d'un paquet de mesure de retard et dont l'action est un acheminement vers ledit second commutateur et pour transmettre ledit paquet de mesure de retard audit premier commutateur ; et
un module d'analyse (132) configuré pour calculer un temps de retard dans une section de communication entre ledit premier commutateur et ledit second commutateur,
dans lequel ledit premier commutateur achemine ledit paquet de mesure de retard reçu en provenance dudit dispositif de commande vers ledit second commutateur, conformément à ladite entrée de flux établie dans ledit premier commutateur, et
dans lequel ledit module d'analyse obtient ledit paquet de mesure de retard en provenance dudit second commutateur et calcule le temps de retard dans ladite section de communication en utilisant un temps estampillé sur ledit paquet de mesure de retard.

2. Système informatique selon la revendication 1, dans lequel ledit dispositif de commande (100) établit, pour ledit second commutateur, une entrée de flux dont une règle est une information d'en-tête dudit paquet de mesure de retard et dont une action est un acheminement vers ledit dispositif de commande,
dans lequel ledit second commutateur achemine ledit paquet de mesure de retard reçu en provenance dudit premier commutateur vers ledit dispositif de commande, conformément à ladite entrée de flux établie dans ledit second commutateur, et
dans lequel ledit module d'analyse (132) obtient ledit paquet de mesure de retard acheminé vers ledit dispositif de commande et calcule ledit temps de retard en utilisant le temps estampillé sur ledit paquet de mesure de retard.

3. Système informatique selon la revendication 1, dans lequel ledit second commutateur achemine un paquet reçu qui ne concorde avec aucune règle dans des entrées de flux établies dans ledit second commutateur, en tant que premier paquet, vers ledit dispositif de commande, et
dans lequel ledit module d'analyse (132) obtient ledit paquet de mesure de retard acheminé vers ledit dispositif de commande et calcule le temps de retard dans ladite section de communication en utilisant un temps estampillé sur ledit paquet de mesure de retard.

4. Système informatique selon l'une quelconque des revendications 1 à 3,
dans lequel ledit dispositif de commande (100) transmet ledit paquet de mesure de retard audit premier commutateur après estampillage d'un temps de transmission sur ledit paquet de mesure de retard et estampille également un temps de réception sur ledit paquet de mesure de retard reçu en provenance dudit second commutateur, et
dans lequel ledit module d'analyse (132) obtient ledit paquet de mesure de retard acheminé vers ledit dispositif de commande et calcule le temps de retard dans ladite section de communication en utilisant ledit temps de transmission et ledit temps de réception estampillés sur ledit paquet de mesure de retard.

5. Système informatique selon la revendication 1, comprenant en outre : un autre dispositif de commande (1'-2) configuré pour établir, pour ledit second commutateur, une entrée de flux dont une règle est une information d'en-tête dudit paquet de mesure de retard et dont une action est un acheminement vers ledit autre dispositif de commande,
dans lequel ledit second commutateur achemine ledit paquet de mesure de retard reçu en provenance dudit premier commutateur vers ledit autre dispositif de commande, conformément à ladite entrée de flux établie dans ledit second commutateur, et
dans lequel ledit module d'analyse (132) obtient ledit paquet de mesure de retard acheminé vers ledit autre dispositif de commande et calcule le temps de retard dans ladite section de communication en utilisant le temps estampillé sur ledit paquet de mesure de retard.

6. Système informatique selon la revendication 5,
dans lequel ledit dispositif de commande transmet ledit paquet de mesure de retard audit premier commutateur après estampillage d'un temps de transmission sur ledit paquet de mesure de retard,
dans lequel ledit autre dispositif de commande estampille un temps de réception sur ledit paquet de mesure de retard reçu en provenance dudit second commutateur, et
dans lequel ledit module d'analyse (132) obtient ledit paquet de mesure de retard acheminé vers ledit dispositif de commande et calcule le temps de retard dans ladite section de communication en utilisant ledit temps de transmission et ledit temps de réception estampillés sur ledit paquet de mesure de retard.

7. Système informatique selon l'une quelconque des revendications 1 à 6,
dans lequel ledit premier commutateur (2-1) transmet ledit paquet de mesure de retard audit second commutateur après estampillage d'un temps de transmission sur ledit paquet de mesure de retard,
dans lequel ledit second commutateur (2-2) estampille un temps de réception dudit paquet de mesure de retard sur ledit paquet de mesure de retard, et
dans lequel ledit module d'analyse (132) calcule le temps de retard dans ladite section de communication en utilisant ledit temps de transmission et ledit temps de réception estampillés sur ledit paquet de mesure de retard.

8. Système informatique selon la revendication 2,
dans lequel ledit dispositif de commande (100) établit, pour ledit premier commutateur, une entrée de flux dont une règle est une information d'en-tête dudit paquet de mesure de retard et dont une action est un estampillage d'un temps de transmission sur ledit paquet de mesure de retard et un acheminement vers ledit second commutateur, et établit, pour ledit second commutateur, une entrée de flux dont une règle est une information d'en-tête dudit paquet de mesure de retard et dont une action est un estampillage d'un temps de réception sur ledit paquet de mesure de retard et un acheminement vers ledit dispositif de commande,
dans lequel ledit premier commutateur estampille ledit temps de transmission sur ledit paquet de mesure de retard reçu en provenance dudit dispositif de commande puis achemine ledit paquet de mesure de retard vers ledit second commutateur, conformément à ladite entrée de flux établie dans ledit premier commutateur,
dans lequel ledit second commutateur estampille ledit temps de réception sur ledit paquet de mesure de retard reçu en provenance dudit premier commutateur puis achemine ledit paquet de mesure de retard vers ledit dispositif de commande, conformément à ladite entrée de flux établie dans ledit second commutateur, et
dans lequel ledit module d'analyse (132) obtient ledit paquet de mesure de retard acheminé vers ledit dispositif de commande et calcule le temps de retard dans ladite section de communication en utilisant ledit temps de transmission et ledit temps de réception estampillés sur ledit paquet de mesure de retard.

9. Système informatique selon la revendication 5, dans lequel ledit dispositif de commande établit, pour ledit premier commutateur, une entrée de flux dont une règle est une information d'en-tête dudit paquet de mesure de retard et dont une action est un estampillage d'un temps de transmission sur ledit paquet de mesure de retard et un acheminement vers ledit second commutateur,
dans lequel ledit autre dispositif de commande établit, pour ledit second commutateur, une entrée de flux dont une règle est une information d'en-tête dudit paquet de mesure de retard et dont une action est un estampillage d'un temps de réception sur ledit paquet de mesure de retard et un acheminement vers ledit dispositif de commande,
dans lequel ledit premier commutateur estampille ledit temps de transmission sur ledit paquet de mesure de retard reçu en provenance dudit dispositif de commande puis achemine ledit paquet de mesure de retard vers ledit second commutateur, conformément à ladite entrée de flux établie dans ledit premier commutateur,
dans lequel ledit second commutateur estampille ledit temps de réception sur ledit paquet de mesure de retard reçu en provenance dudit premier commutateur puis achemine ledit paquet de mesure de retard vers ledit dispositif de commande, conformément à ladite entrée de flux établie dans ledit second commutateur, et
dans lequel ledit module d'analyse obtient ledit paquet de mesure de retard acheminé vers ledit dispositif de commande et calcule le temps de retard dans ladite section de communication en utilisant ledit temps de transmission et ledit temps de réception estampillés sur ledit paquet de mesure de retard.

10. Système informatique selon l'une quelconque des revendications 1 à 9,
dans lequel un protocole dans un champ d'entête IP (protocole Internet) est défini comme étant la règle de l'entrée de flux pour acheminer ledit paquet de mesure de retard,
dans lequel si le protocole dans le champ d'entête IP d'un paquet reçu concorde avec la règle de ladite entrée de flux établie dans ledit premier commutateur, ledit premier commutateur achemine ledit paquet reçu vers ledit second commutateur quel que soit le contenu d'autres couches dans l'information d'entête dudit paquet reçu.

11. Système informatique selon l'une quelconque des revendications 1 à 10, comprenant en outre : une pluralité de commutateurs (2-1 ... 2-n) incluant ledit premier commutateur et ledit second commutateur,
dans lequel une pluralité de voies de communication sont formées entre deux commutateurs de ladite pluralité de commutateurs,
dans lequel ledit module d'analyse calcule des temps de retard respectifs dans ladite pluralité de voies de communication en utilisant ledit paquet de mesure de temps de retard pour mesurer un temps de retard dans une section de communication entre deux commutateurs adjacents inclus dans chacune de ladite pluralité de voies de communication, et détermine une voie de communication dont le temps de retard est minimal parmi ladite pluralité de voies de communication en tant que voies de retard minimal.

12. Système informatique selon la revendication 11,
dans lequel chacune de ladite pluralité de voies de communication comprend au moins une section de communication formée par les deux commutateurs adjacents,
dans lequel ledit module d'analyse établit un temps de retard dans une section de communication partagée par la totalité de ladite pluralité de voies de communication à 0 et établit une autre section de communication en tant que cible de mesure de temps de retard en utilisant ledit paquet de mesure de retard.

13. Dispositif de commande (1) comprenant :
une unité de commande de flux (12) configurée pour établir, pour un premier commutateur, une entrée de flux dont une règle est une information d'en-tête d'un paquet de mesure de retard et dont une action est un acheminement vers un second commutateur adjacent audit premier commutateur ; et
une unité de mesure de retard (13) configurée pour transmettre ledit paquet de mesure de retard audit premier commutateur,
dans lequel ladite unité de mesure de retard obtient ledit paquet de mesure de retard qui est acheminé dudit premier commutateur audit second commutateur conformément à ladite entrée de flux, et
dans lequel ladite unité de mesure de retard calcule un temps de retard dans une section de communication entre ledit premier commutateur et ledit second commutateur en utilisant un temps estampillé sur ledit paquet de mesure de retard.

14. Dispositif de commande selon la revendication 13,
dans lequel ladite unité de commande de flux (12) établit, pour ledit second commutateur, une entrée de flux dont une règle est une information d'en-tête dudit paquet de mesure de retard et dont une action est un acheminement vers ledit dispositif de commande, et
dans lequel ladite unité de mesure de retard (13) obtient ledit paquet de mesure de retard qui est acheminé en provenance dudit second commutateur conformément à ladite entrée de flux, et
dans lequel ladite unité de mesure de retard (13) calcule le temps de retard dans ladite section de communication en utilisant un temps estampillé sur ledit paquet de mesure de retard.

15. Dispositif de commande selon la revendication 13,
dans lequel ladite unité de mesure de retard (13) obtient ledit paquet de mesure de retard qui est un paquet ne concordant avec aucune règle dans des entrées de flux établies dans ledit second commutateur et étant acheminé en provenance dudit second commutateur, et calcule le temps de retard dans ladite section de communication en utilisant un temps estampillé sur ledit paquet de mesure de retard.

16. Dispositif de commande selon l'une quelconque des revendications 13 à 15,
dans lequel ladite unité de mesure de retard (13) transmet ledit paquet de mesure de retard audit premier commutateur après estampillage d'un temps de transmission sur ledit paquet de mesure de retard et estampille également un temps de réception sur ledit paquet de mesure de retard reçu en provenance dudit second commutateur, et
dans lequel ladite unité de mesure de retard (13) calcule le temps de retard dans ladite section de communication en utilisant ledit temps de transmission et ledit temps de réception.

17. Dispositif de commande selon la revendication 14,
dans lequel ladite unité de commande de flux (12) établit, pour ledit premier commutateur, une entrée de flux dont une règle est une information d'en-tête dudit paquet de mesure de retard et dont une action est un estampillage d'un temps de transmission sur ledit paquet de mesure de retard et un acheminement vers ledit second commutateur, et établit, pour ledit second commutateur, une entrée de flux dont une règle est une information d'en-tête dudit paquet de mesure de retard et dont une action est un estampillage d'un temps de réception sur ledit paquet de mesure de retard et un acheminement vers ledit dispositif de commande,
dans lequel ledit premier commutateur estampille ledit temps de transmission sur ledit paquet de mesure de retard reçu en provenance dudit dispositif de commande puis achemine ledit paquet de mesure de retard vers ledit second commutateur, conformément à ladite entrée de flux établie dans ledit premier commutateur,
dans lequel ledit second commutateur estampille ledit temps de réception sur ledit paquet de mesure de retard reçu en provenance dudit premier commutateur puis achemine ledit paquet de mesure de retard vers ledit dispositif de commande, conformément à ladite entrée de flux établie dans ledit second commutateur, et
dans lequel ladite unité de mesure de retard (13) obtient ledit paquet de mesure de retard acheminé en provenance dudit second commutateur et calcule le temps de retard dans ladite section de communication en utilisant ledit temps de transmission et ledit temps de réception estampillés sur ledit paquet de mesure de retard.

18. Dispositif de commande selon l'une quelconque des revendications 13 à 17,
dans lequel une pluralité de voies de communication est formée entre deux commutateurs d'une pluralité de commutateurs,
dans lequel ladite unité de mesure de retard (13) calcule des temps de retard respectifs dans ladite pluralité de voies de communication en utilisant ledit paquet de mesure de temps de retard pour mesurer un temps de retard dans une section de communication entre deux commutateurs adjacents inclus dans chacune de ladite pluralité de voies de communication, et détermine une voie de communication dont le temps de retard est minimal parmi ladite pluralité de voies de communication en tant que voies de retard minimal.

19. Dispositif de commande selon la revendication 18,
dans lequel ladite unité de mesure de retard (13) calcule des temps de retard respectifs dans ladite pluralité de voies de communication en établissant un temps de retard dans une section de communication partagée par la totalité de ladite pluralité de voies de communication à 0 et en utilisant ledit paquet de mesure de temps de retard pour mesurer un temps de retard dans une autre section de communication.

20. Support d'enregistrement sur lequel est enregistré un programme,
dans lequel le programme, lorsqu'il est exécuté par ordinateur, accomplit une fonction du dispositif de commande selon l'une quelconque des revendications 13 à 19.

21. Procédé d'analyse de voie de communication comprenant :
une étape d'établissement, par un dispositif de commande, pour un premier commutateur, d'une entrée de flux dont une règle est une information d'en-tête d'un paquet de mesure de retard et dont une action est un acheminement vers un second commutateur adjacent audit premier commutateur ;
une étape de transmission, par ledit dispositif de commande, dudit paquet de mesure de retard audit premier commutateur ;
une étape d'acheminement, par ledit premier commutateur, dudit paquet de mesure de retard reçu en provenance dudit dispositif de commande vers ledit second commutateur, conformément à ladite entrée de flux établie dans ledit premier commutateur ; et
une étape d'obtention, par un module d'analyse, dudit paquet de mesure de retard en provenance dudit second commutateur et de calcul du temps de retard dans ladite section de communication en utilisant un temps estampillé sur ledit paquet de mesure de retard.

22. Procédé d'analyse de voie de communication selon la revendication 21, comprenant en outre :
une étape d'établissement, par ledit dispositif de commande, pour ledit second commutateur, d'une entrée de flux dont une règle est une information d'en-tête dudit paquet de mesure de retard et dont une action est un acheminement vers ledit dispositif de commande ; et
une étape d'acheminement, par ledit second commutateur, dudit paquet de mesure de retard reçu en provenance dudit premier commutateur vers ledit dispositif de commande, conformément à ladite entrée de flux établie dans ledit second commutateur,
dans lequel l'étape de calcul du temps de retard dans ladite section de communication comprend : une étape d'obtention, par ledit module d'analyse, dudit paquet de mesure de retard acheminé vers ledit dispositif de commande et de calcul dudit temps de retard en utilisant le temps estampillé sur ledit paquet de mesure de retard.

23. Procédé d'analyse de voie de communication selon la revendication 21, comprenant en outre : une étape d'acheminement, par ledit second commutateur, d'un paquet reçu qui ne concorde avec aucune règle dans des entrées de flux établies dans ledit second commutateur, en tant que premier paquet, vers ledit dispositif de commande,
dans lequel l'étape de calcul du temps de retard dans ladite section de communication comprend : une étape d'obtention, par ledit module d'analyse, dudit paquet de mesure de retard acheminé vers ledit dispositif de commande et de calcul dudit temps de retard en utilisant un temps estampillé sur ledit paquet de mesure de retard.

24. Procédé d'analyse de voie de communication selon l'une quelconque des revendications 21 à 23, comprenant en outre :
une étape de transmission, par ledit dispositif de commande, dudit paquet de mesure de retard audit premier commutateur après estampillage d'un temps de transmission sur ledit paquet de mesure de retard ; et
une étape d'estampillage, par ledit dispositif de commande, d'un temps de réception sur ledit paquet de mesure de retard reçu en provenance dudit second commutateur,
dans lequel l'étape de calcul du temps de retard dans ladite section de communication comprend : une étape d'obtention, par ledit module d'analyse, dudit paquet de mesure de retard acheminé vers ledit dispositif de commande et de calcul du temps de retard dans ladite section de communication en utilisant ledit temps de transmission et ledit temps de réception estampillés sur ledit paquet de mesure de retard.

25. Procédé d'analyse de voie de communication selon la revendication 21, comprenant en outre :
une étape d'établissement, par un autre dispositif de commande, pour ledit second commutateur, d'une entrée de flux dont une règle est une information d'entête dudit paquet de mesure de retard et dont une action est un acheminement vers ledit autre dispositif de commande ; et
une étape d'acheminement, par ledit second commutateur, dudit paquet de mesure de retard reçu en provenance dudit premier commutateur vers ledit autre dispositif de commande, conformément à ladite entrée de flux établie dans ledit second commutateur,
dans lequel l'étape de calcul du temps de retard dans ladite section de communication comprend : une étape d'obtention, par ledit module d'analyse, dudit paquet de mesure de retard acheminé vers ledit autre dispositif de commande et de calcul du temps de retard dans ladite section de communication en utilisant le temps estampillé sur ledit paquet de mesure de retard.

26. Procédé d'analyse de voie de communication selon la revendication 25, comprenant en outre :
une étape de transmission, par ledit dispositif de commande, dudit paquet de mesure de retard audit premier commutateur après estampillage d'un temps de transmission sur ledit paquet de mesure de retard ; et
une étape d'estampillage, par ledit autre dispositif de commande, d'un temps de réception sur ledit paquet de mesure de retard reçu en provenance dudit second commutateur,
dans lequel l'étape de calcul du temps de retard dans ladite section de communication comprend : une étape d'obtention, par ledit module d'analyse, dudit paquet de mesure de retard acheminé vers ledit dispositif de commande et de calcul du temps de retard dans ladite section de communication en utilisant ledit temps de transmission et ledit temps de réception estampillés sur ledit paquet de mesure de retard.

27. Procédé d'analyse de voie de communication selon l'une quelconque des revendications 21 à 26, comprenant en outre :
une étape d'utilisation, par ledit module d'analyse, dudit paquet de mesure de temps de retard pour mesurer un temps de retard dans une section de communication entre deux commutateurs adjacents inclus dans chacune d'une pluralité de voies de communication formées entre deux commutateurs d'une pluralité de commutateurs ;
une étape de calcul, par ledit module d'analyse, de temps de retard respectifs dans ladite pluralité de voies de communication en utilisant le temps de retard mesuré dans ladite section de communication ; et
une étape de comparaison, par ledit module d'analyse, des temps de retard calculés dans les voies de communication respectives pour déterminer une voie de communication dont le temps de retard est minimal parmi ladite pluralité de voies de communication en tant que voies de retard minimal.

28. Procédé d'analyse de voie de communication selon la revendication 27,
dans lequel l'étape d'utilisation dudit paquet de mesure de temps de retard pour mesurer le temps de retard comprend : une étape d'établissement, par ledit module d'analyse, d'un temps de retard dans une section de communication partagée par la totalité de ladite pluralité de voies de communication à 0 et d'établissement d'un temps de retard dans une autre section de communication en tant que cible de mesure en utilisant ledit paquet de mesure de retard.
